# EUROPEAN PATENT APPLICATION

(11) **EP 4 845 296 A1**
(43) Date of publication of application: **25.11.2026**
(21) Application number: 25751042.0
(22) Date of filing: 07.01.2025
(51) Int. Cl.: H04W 76/14

(54) **PROXIMITY SERVICE COMMUNICATION METHOD AND APPARATUS, AND COMMUNICATION APPARATUS AND STORAGE MEDIUM**

(30) Priority: 06.02.2024 CN 202410170724
(71) Applicant: Datang Mobile Communications Equipment Co., Ltd., Beijing 100085 (CN)
(72) Inventor: DENG, Qiang, Beijing 100085 (CN)
(74) Representative: Ipsilon
(86) International application number: PCT/CN2025/071062
(87) International publication number: WO 2025/167440

(57) **Abstract**

The present application relates to the technical field of wireless communications, and specifically relates to a proximity services communication method. The method applied to a source terminal device comprises: acquiring multi-hop relay information; and sequentially initiating direct communication requests at relay terminal devices on the basis of the multi-hop relay information.

## Description

### CROSS-REFERENCE

This application claims priority to Chinese Patent Application No. 2024101707244, titled "PROXIMITY SERVICES COMMUNICATION METHOD AND APPARATUS, COMMUNICATION APPARATUS AND STORAGE MEDIUM", filed on February 6, 2024, entire contents of which are incorporated herein by reference.

### TECHNICAL FIELD

The present application relates to the field of wireless communication technologies, and in particular, to a proximity services communication method, a proximity services communication apparatus, a communication apparatus, a processor-readable storage medium and a computer program product.

### BACKGROUND

proximity services (ProSe) in 5G systems are studied and standardized in 3GPP R18. When two User Equipments (UEs) cannot directly communicate with each other due to a long distance, poor signal quality, or the like, these UEs may communicate through another UE which functions as a relay. In the ProSe, the two UEs are called End UEs, and the relaying UE is called a UE-to-UE Relay. Currently, the R18 standard only supports establishment of a connection from one End UE to the other End UE through a single-hop UE-to-UE Relay.

### SUMMARY

In a first aspect, the present application provides a proximity services communication method applied to a source terminal device, including:
acquiring multi-hop relay information; and
sequentially initiating direct communication requests at relay terminal devices according to the multi-hop relay information.

In an embodiment, sequentially initiating the direct communication requests at the relay terminal devices according to the multi-hop relay information includes:
sending a first direct communication request to a first relay terminal device based on the multi-hop relay information.

In an embodiment, the method further includes: receiving first response information, and establishing a connection between the source terminal device and the first relay terminal device.

In an embodiment, the method further includes: receiving a first direct communication accept message of the first relay terminal device.

In an embodiment, the direct communication request includes any one or any combination of: source terminal device information, relay terminal device information corresponding to each relay terminal device, target terminal device information, hop count information used for indicating a number of hops from a current terminal device to a target terminal device, and a relay service code (RSC). Device information corresponding to each of the source terminal device, the target terminal device and the each relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In an embodiment, acquiring the multi-hop relay information includes: sending a discovery request message, where the discovery request message includes the target terminal device information; and receiving a discovery response message through the relay terminal devices, and determining the multi-hop relay information based on the discovery response message, where the multi-hop relay information includes relay terminal device information and multi-hop path information.

In a second aspect, the present application provides a proximity services communication apparatus applied to a source terminal device, including:
a multi-hop relay information acquiring module, configured to acquire multi-hop relay information; and
a request initiating module, configured to sequentially initiate direct communication requests at relay terminal devices according to the multi-hop relay information.

In a third aspect, the present application further provides a communication apparatus, including:
a memory configured to store a computer program;
a transceiver configured to transceive data under control of a processor; and
the processor configured to read the computer program in the memory and perform: acquiring multi-hop relay information; and sequentially initiating direct communication requests at relay terminal devices according to the multi-hop relay information.

In an embodiment, sequentially initiating the direct communication requests at the relay terminal devices according to the multi-hop relay information includes: sending a first direct communication request to a first relay terminal device based on the multi-hop relay information.

In an embodiment, the direct communication request includes any one or any combination of: source terminal device information, relay terminal device information corresponding to each relay terminal device, target terminal device information, hop count information used for indicating a number of hops from a current terminal device to a target terminal device, and a relay service code (RSC),
where device information corresponding to each of a source terminal device, the target terminal device and each relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In an embodiment, acquiring the multi-hop relay information includes: sending a discovery request message, where the discovery request message includes target terminal device information; and receiving a discovery response message through the relay terminal devices, and determining the multi-hop relay information based on the discovery response message, where the multi-hop relay information includes relay terminal device information and multi-hop path information.

In a fourth aspect, the present application further provides a processor-readable storage medium. The processor-readable storage medium stores a program which, when executed, causes a processor to implement the steps of the method according to any one of the embodiments of the first aspect.

In a fifth aspect, the present application further provides a computer program product including a computer program which, when executed by a processor, implements the steps of the method according to any one of the embodiments of the first aspect.

In a sixth aspect, the present application provides a proximity services communication method applied to a relay terminal device, including:
receiving a first direct communication request of a first terminal device, and verifying the first direct communication request, where the first terminal device includes: a source terminal device or a relay terminal device, and the first direct communication request includes multi-hop relay information; and
initiating a second direct communication request to a second terminal device when the verification of the first direct communication request is completed, where the second terminal device includes: a target terminal device or a relay terminal device.

In an embodiment, verifying the first direct communication request includes:
comparing relay terminal device information corresponding to the relay terminal device with relay terminal device information contained in the first direct communication request; and/or
comparing a relay service code (RSC) contained in the first direct communication request with an RSC acquired by a Policy Control function (PCF) network element.

In an embodiment, when the verification of the first direct communication request is successful, the method further includes: sending first response information to the first terminal device, and establishing a connection between the relay terminal device and the first terminal device.

In an embodiment, the method further includes: receiving a secure message sent by the first terminal device, and determining a PC5 QoS Identifier (PQI) parameter between the first terminal device and the relay terminal device based on the secure message,
where the secure message includes at least one of: IP address configuration information or an End-to-End PQI parameter.

In an embodiment, the method further includes: receiving a second direct communication accept message of the second terminal device, and sending a first direct communication accept message to the first terminal device.

In an embodiment, a direct communication request includes any one or any combination of: source terminal device information, relay terminal device information corresponding to each relay terminal device, target terminal device information, hop count information used for indicating a number of hops from a current terminal device to the target terminal device, and an RSC,
where device information corresponding to each of the source terminal device, the target terminal device and the each relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In an embodiment, the multi-hop relay information includes relay terminal device information and multi-hop path information.

In a seventh aspect, the present application provides a proximity services communication apparatus applied to a relay terminal device, including:
a request verifying module, configured to, in response to a first direct communication request of a first terminal device, verify the first direct communication request, where the first terminal device includes a source terminal device or a relay terminal device, and the first direct communication request includes multi-hop relay information; and
a request processing module, configured to, initiate a second direct communication request to a second terminal device when the verification of the first direct communication request is completed, where the second terminal device includes a target terminal device or a relay terminal device.

In an eighth aspect, the present application further provides a communication apparatus, including:
a memory configured to store a computer program;
a transceiver configured to transceive data under control of a processor; and
the processor configured to read the computer program in the memory and perform the following operations: receiving a first direct communication request of a first terminal device, and verifying the first direct communication request, where the first terminal device includes a source terminal device or a relay terminal device, and the first direct communication request includes multi-hop relay information; and initiating a second direct communication request to a second terminal device when verification of the first direct communication request is completed, where the second terminal device includes a target terminal device or a relay terminal device.

In an embodiment, verifying the first direct communication request includes: comparing relay terminal device information corresponding to the relay terminal device with relay terminal device information contained in the first direct communication request; and/or comparing a relay service code (RSC) contained in the first direct communication request with an RSC acquired by a PCF network element.

In an embodiment, the processor reads the computer program in the memory and performs the following operation: sending first response information to the first terminal device when the verification of the first direct communication request is successful, and establishing a connection between the relay terminal device and the first terminal device.

In an embodiment, the processor reads the computer program in the memory and performs the following operation: receiving a secure message sent by the first terminal device, and determining a PQI parameter between the first terminal device and the relay terminal device based on the secure message, where the secure message includes at least one of: IP address configuration information or an End-to-End PQI parameter.

In an embodiment, a direct communication request includes any one or more of: source terminal device information, relay terminal device information corresponding to each relay terminal device, target terminal device information, hop count information used for indicating a number of hops from a current terminal device to the target terminal device, and ane RSC, where device information corresponding to each of the source terminal device, the target terminal device and each relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In an embodiment, the multi-hop relay information includes relay terminal device information and multi-hop path information.

In a ninth aspect, the present application further provides a processor-readable storage medium. The processor-readable storage medium stores a program which, when executed, causes a processor to implement the steps of the method according to any one of the embodiments of the sixth aspect.

In a tenth aspect, the present application further provides a computer program product including a computer program which, when executed by a processor, implements the steps of the method according to any one of the embodiments of the sixth aspect.

In an eleventh aspect, the present application provides a proximity services communication method applied to a relay terminal device, including:
receiving a second direct communication accept message of a second terminal device, and establishing a connection between the relay terminal device and the second terminal device, where the second terminal device includes a target terminal device or a relay terminal device; and
sending a first direct communication accept message to a first terminal device, where the first terminal device includes a source terminal device or a relay terminal device,
where the first direct communication accept message and the second direct communication accept message each include multi-hop relay information.

In an embodiment, the first direct communication accept message and the second direct communication accept message each further include: source terminal device information, target terminal device information, and hop count information used for indicating a number of hops from a current terminal device to the target terminal device;
where device information corresponding to each of the source terminal device, the target terminal device and the relay terminal device includes terminal device user information identification and layer-2 identification information.

In an embodiment, the multi-hop relay information includes relay terminal device information and multi-hop path information.

In an embodiment, the layer-2 identification information corresponding to the source terminal device and the layer-2 identification information corresponding to the target terminal device are configured based on terminal devices corresponding to a current connection.

In an embodiment, before receiving the second direct communication accept message of the second terminal device, the method further includes:
receiving a first direct communication request of the first terminal device, where the first terminal device includes the source terminal device or the relay terminal device; and
generating a second direct communication request based on relay terminal device information, and sending the second direct communication request to the second terminal device, where the second direct communication request includes the relay terminal device information, and the second terminal device includes the relay terminal device and/or the target terminal device.

In an embodiment, the first direct communication request includes source terminal device information, target terminal device information, and a relay service code (RSC); or, the first direct communication request includes source terminal device information, target terminal device information, an RSC, and relay terminal device information of at least one relay terminal device;
the second direct communication request includes the source terminal device information, the target terminal device information, an RSC, and relay terminal device information of at least one relay terminal device;
where device information corresponding to each of the source terminal device, the target terminal device and each relay terminal device includes terminal device user information identification and layer-2 identification information.

In an embodiment, the first direct communication request and/or the second direct communication request further includes a relay terminal device performance parameter.

In an embodiment, the method further includes: determining a target relay terminal device according to relay terminal device performance parameters corresponding to respective relay terminal devices; and
writing the relay terminal device information corresponding to the target relay terminal device into a direct communication request, and sending the direct communication request.

In an embodiment, the relay terminal device performance parameter includes at least one of: a signal strength parameter between the relay terminal device and the source terminal device, or a load parameter of the relay terminal device.

In an embodiment, the first direct communication request and/or the second direct communication request further includes relay multi-hop threshold information.

In a twelfth aspect, the. present application provides a proximity services communication apparatus applied to a relay terminal device, including:
a request message receiving module, configured to receive a second direct communication accept message of a second terminal device, and establish a connection between the relay terminal device and the second terminal device, where the second terminal device includes: a target terminal device or a relay terminal device; and
a request message sending module, configured to send a first direct communication accept message to a first terminal device, where the first terminal device includes: a source terminal device or a relay terminal device,
where the first direct communication accept message and the second direct communication accept message each include multi-hop relay information.

In a thirteenth aspect, the present application further provides a communication apparatus, including:
a memory configured to store a computer program;
a transceiver configured to transceive data under control of a processor; and
the processor configured to read the computer program in the memory and perform the following operations: receiving a second direct communication accept message of a second terminal device, and establishing a connection between the relay terminal device and the second terminal device, where the second terminal device includes: a target terminal device or a relay terminal device; and sending a first direct communication accept message to a first terminal device, where the first terminal device includes: a source terminal device or a relay terminal device; where the first direct communication accept message and the second direct communication accept message each include multi-hop relay information.

In an embodiment, the first direct communication accept message and the second direct communication accept message each further include: source terminal device information, target terminal device information, and hop count information used for indicating a number of hops from a current terminal device to the target terminal device; where device information corresponding to each of the source terminal device, the target terminal device and the relay terminal device includes terminal device user information identification and layer-2 identification information.

In an embodiment, the multi-hop relay information includes relay terminal device information and multi-hop path information.

In an embodiment, the layer-2 identification information corresponding to the source terminal device and the layer-2 identification information corresponding to the target terminal device are configured based on terminal devices corresponding to a current connection.

In an embodiment, the processor reads the computer program in the memory and performs the following operations: before receiving the second direct communication accept message of the second terminal device, receiving a first direct communication request of the first terminal device; and generating a second direct communication request based on relay terminal device information, and sending the second direct communication request to the second terminal device, where the second direct communication request includes the relay terminal device information.

In an embodiment, the first direct communication request includes source terminal device information, target terminal device information, and a relay service code (RSC); or, the first direct communication request includes source terminal device information, target terminal device information, an RSC, and relay terminal device information of at least one relay terminal device; the second direct communication request includes the source terminal device information, the target terminal device information, an RSC, and relay terminal device information of at least one relay terminal device; where device information corresponding to each of the source terminal device, the target terminal device and each relay terminal device includes terminal device user information identification and layer-2 identification information.

In an embodiment, the first direct communication request and/or the second direct communication request further includes a relay terminal device performance parameter.

In an embodiment, the processor reads the computer program in the memory and performs the following operations: determining a target relay terminal device according to the relay terminal device performance parameters corresponding to respective relay terminal devices; and writing the relay terminal device information corresponding to the target relay terminal device into a direct communication request, and sending the direct communication request.

In an embodiment, the relay terminal device performance parameters include at least one of: a signal strength parameter between the relay terminal device and the source terminal device, or a load parameter of the relay terminal device.

In an embodiment, the first direct communication request and/or the second direct communication request further includes relay multi-hop threshold information.

In a fourteenth aspect, the present application further provides a processor-readable storage medium. The processor-readable storage medium stores a program which, when executed, causes a processor to implement the steps of the method according to any one of the embodiments of the eleventh aspect.

In a fifteenth aspect, the present application further provides a computer program product including a computer program which, when executed by a processor, implements the steps of the method according to any one of the embodiments of the eleventh aspect.

In a sixteenth aspect, the present application provides a proximity services communication method applied to a target terminal device, including:
establishing multi-hop relay information according to a received direct communication request corresponding to at least one relay terminal device; and
sequentially initiating direct communication accept messages at relay terminal devices according to the multi-hop relay information.

In an embodiment, the direct communication request includes a relay terminal device performance parameter.

In an embodiment, establishing the multi-hop relay information according to the received direct communication request corresponding to the at least one relay terminal device includes:
sorting respective relay terminal devices according to the relay terminal device performance parameters; and
selecting a target relay terminal device based on a sorting result, and generating the multi-hop relay information.

In an embodiment, the direct communication request includes a target relay terminal device configured by a relay terminal device; the method further includes: establishing the multi-hop relay information based on the target relay terminal device.

In an embodiment, the relay terminal device performance parameter includes at least one of a signal strength parameter between the relay terminal device and the source terminal device, or a load parameter of the relay terminal device.

In an embodiment, the multi-hop relay information includes relay terminal device information and multi-hop path information.

In an embodiment, the direct communication request further includes relay multi-hop threshold information;
the method further includes: selecting a number of target relay terminal devices satisfying the relay multi-hop threshold information, and generating the multi-hop relay information.

In a seventeenth aspect, the present application provides a proximity services communication apparatus applied to a target terminal device, including:
a multi-hop relay information establishing module, configured to establish multi-hop relay information according to a received direct communication request corresponding to at least one relay terminal device; and
a request processing module, configured to sequentially initiate direct communication accept messages at relay terminal devices according to the multi-hop relay information.

In an eighteenth aspect, the present application further provides a communication apparatus, including:
a memory configured to store a computer program;
a transceiver configured to transceive data under control of a processor; and
the processor configured to read the computer program in the memory and perform the following operations: establishing multi-hop relay information according to a received direct communication request corresponding to at least one relay terminal device; and sequentially initiating direct communication accept messages at relay terminal devices according to the multi-hop relay information.

In an embodiment, the direct communication request includes a relay terminal device performance parameter.

In an embodiment, establishing the multi-hop relay information according to the received direct communication request corresponding to the at least one relay terminal device includes: sorting respective relay terminal devices according to the relay terminal device performance parameters; and selecting a target relay terminal device based on a sorting result, and generating the multi-hop relay information.

In an embodiment, the direct communication request includes a target relay terminal device configured by a relay terminal device;
the processor reads the computer program in the memory and performs the following operation: establishing the multi-hop relay information based on the target relay terminal device.

In an embodiment, the relay terminal device performance parameter includes at least one of: a signal strength parameter between the relay terminal device and the source terminal device, or a load parameter of the relay terminal device.

In an embodiment, the multi-hop relay information includes relay terminal device information and multi-hop path information.

In an embodiment, the direct communication request further includes relay multi-hop threshold information;
the processor reads the computer program in the memory and performs the following operation: selecting a number of target relay terminal devices satisfying the relay multi-hop threshold information, and generating the multi-hop relay information.

In a nineteenth aspect, the present application further provides a processor-readable storage medium. The processor-readable storage medium stores a program which, when executed, causes a processor to implement the steps of the method according to any one of the embodiments of the sixteenth aspect.

In a twentieth aspect, the present application further provides a computer program product including a computer program which, when executed by a processor, implements the steps of the method according to any one of the embodiments of the sixteenth aspect.

The above description is only an overview of the technical solution of the present application. In order to better understand the technical means of the present application, it can be implemented in accordance with the contents of the specification, and in order to make the above and other objects, features, and advantages of the present application more clearly understand, the specific implementation of the present application is listed below.

### BRIEF DESCRIPTION OF THE DRAWINGS

Various other advantages and merits will become apparent to those skilled in the art by reading through the following detailed description of embodiments. Figures are only intended to illustrate embodiments and not construed as limiting the present application. In all figures, like reference numerals denote like parts. In the drawings:
FIG. 1 is a schematic flow diagram of a proximity services communication method applied to a source terminal device side according to some embodiments;
FIG. 2 is a schematic flow diagram of a proximity services communication method applied to a relay terminal device side according to some embodiments;
FIG. 3 is a timing diagram of a multi-hop UE-to-UE Relay connection establishing process in some embodiments;
FIG. 4 is another schematic flow diagram of a proximity services communication method applied to a relay terminal device side according to some embodiments;
FIG. 5 is a schematic flow diagram of a method for selecting a target relay terminal device by a relay terminal device in some embodiments;
FIG. 6 is a schematic flow diagram of a method for processing a direct communication accept message by the relay terminal device in some embodiments;
FIG. 7 is a schematic flow diagram of a proximity services communication method applied to a target terminal device side according to some embodiments;
FIG. 8 is another timing diagram of a multi-hop UE-to-UE Relay connection establishing process in some embodiments;
FIG. 9 is a schematic diagram of a multi-hop UE-to-UE Relay architecture in some embodiments;
FIG. 10 is a structural block diagram of a proximity services communication apparatus applied to a source terminal device according to some embodiments;
FIG. 11 is a structural block diagram of a proximity services communication apparatus applied to a relay terminal device according to some embodiments;
FIG. 12 is another structural block diagram of a proximity services communication apparatus applied to a relay terminal device according to some embodiments;
FIG. 13 is a structural block diagram of a proximity services communication apparatus applied to a target terminal device according to some embodiments; and
FIG. 14 is a schematic diagram of a communication apparatus according to some embodiments.

### DETAILED DESCRIPTION

The technical solutions of the present application are described in detail below according to embodiments in conjunction with the accompanying drawings. The following embodiments are exemplary and are only intended to illustrate the technical solutions of the present application more clearly, rather than to limit the protection scope of the present application.

Unless defined otherwise, all technical and scientific terms used herein have the same meaning as commonly understood by one of ordinary skill in the art to which this application belongs. The terminology used herein is for the purpose of describing particular embodiments only and is not intended to limit the application. Terms "include", "have" and any variations thereof in the description, the claims, and the description of the drawings of the present application are intended to indicate a non-exclusive inclusion.

In the description of the embodiments of the present application, terms such as "first", "second", or the like are only used for distinguishing different objects, and are not intended to indicate or imply relative importance or significance or to imply the number, specific sequence, or primary and secondary relationship of technical features described by these terms. In the description of the embodiments of the present application, "multiple" means two or more, unless otherwise clearly and specifically defined.

Reference herein to "embodiment" means that a particular feature, structure, or characteristic described in connection with the embodiment may be included in at least one embodiment of the present application. The appearances of this phrase in various places in the specification are not necessarily all referring to the same embodiment, nor referring to separate or alternative embodiments mutually exclusive of other embodiments. It is explicitly and implicitly understood by those skilled in the art that the embodiments described herein can be combined with other embodiments.

In the description of the embodiments of the present application, the term "and/or" herein only describes an association relationship between associated objects, and indicates that three relationships may exist. For example, A and/or B may indicate three cases: only A exists; both A and B exist; and only B exists. In addition, the character "/" herein generally indicates an "or" relationship between the associated objects.

In the description of the embodiments of the present application, the term "a plurality of" means more than two (including two); similarly, "a plurality of groups" means more than two groups (including two groups), and "a plurality of sheets" means more than two sheets (including two sheets).

In descriptions of the embodiments of the present application, directions or positional relationships indicated by technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" etc. are based on orientations or positional relationships shown in the accompanying drawings, and they are used only for describing the embodiments of the present application and for description simplicity, but do not indicate or imply that an indicated apparatus or element must have a specific orientation or be constructed and operated in a specific orientation. Therefore, it cannot be understood as a limitation on the embodiments of the present application.

In the description of the embodiments of the present application, unless otherwise explicitly specified and defined, the technical terms "mounting", "coupling", "connecting", "fixing", etc., should be understood in a broad sense, such as a fixed connection, a detachable connection, or an integral connection; a mechanical connection or an electrical connection; a direct connection, an indirect connection through an intermediate medium, an internal connection of two elements, or an interaction of two elements. For those of ordinary skill in the art, the specific meanings of the above terms in the embodiments of the present application can be understood on case-by-case.

In related technology, an End UE communicates with a target End UE through a UE-to-UE Relay, which can extend a communication range and meanwhile save power of the UEs, and therefore becomes an important communication form for public safety and business applications. In some scenarios such as a basement or a forest, after the End UE is connected to the UE-to-UE Relay through a single hop, the End UE often cannot communicate with the target End UE, that is, the communication between the End UE and the target End UE can only be realized through multiple hops. The process that the End UEs establish the connection through a single-hop UE-to-UE Relay has been studied and standardized in R18, but how the End UEs establish the connection through multi-hop UE-to-UE Relays has not been solved in the standard.

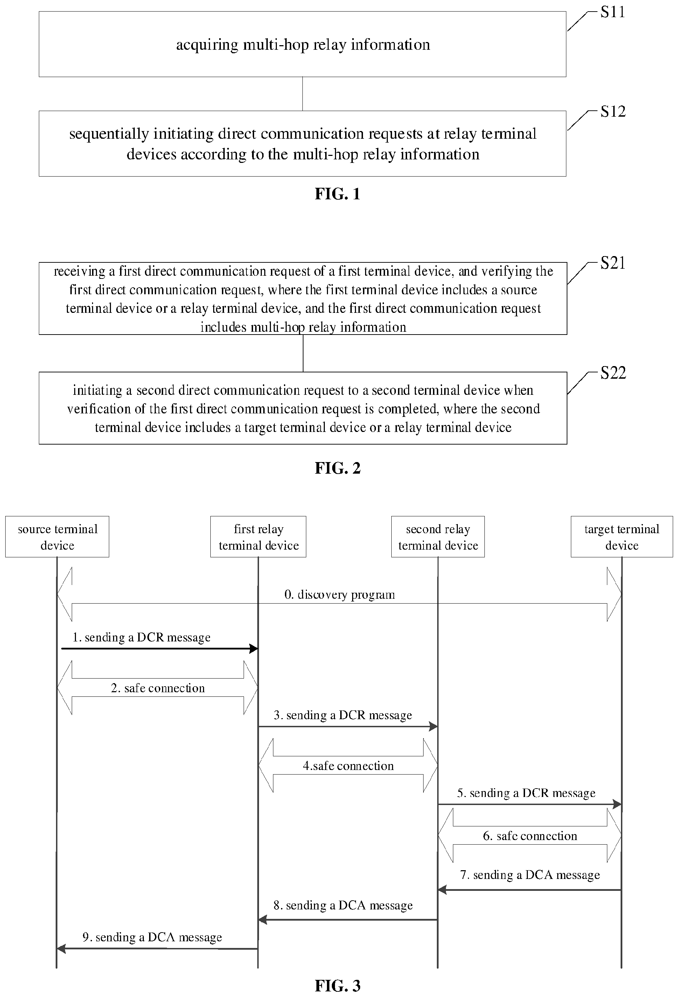

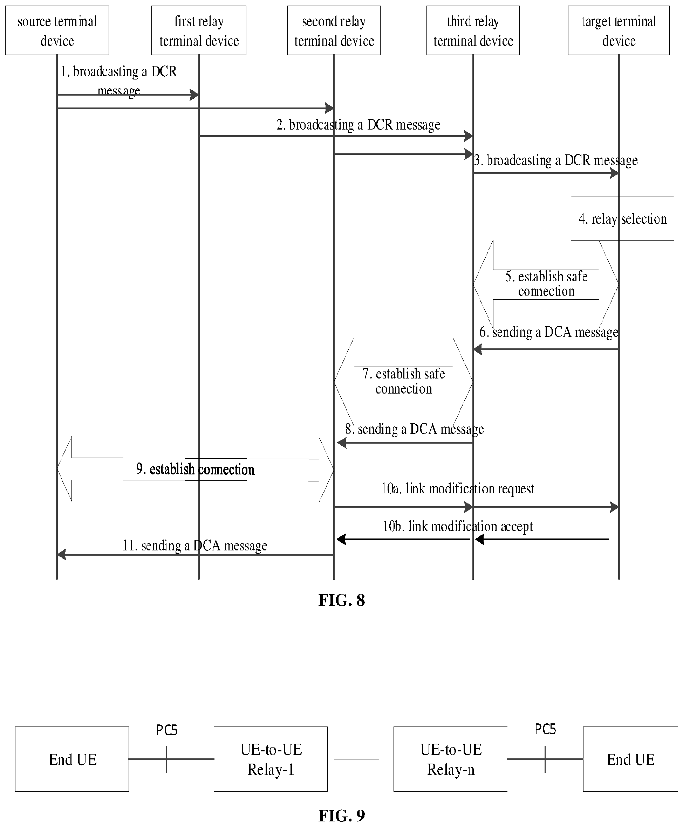

In an embodiment, there is provided a proximity services communication method, which can be applied to an architecture shown in FIG. 9. The communication method can be applied to a source terminal device, and as shown in FIG. 1, the communication method includes the following steps:
step S11: acquiring multi-hop relay information; and
step S12: sequentially initiating direct communication requests at relay terminal devices according to the multi-hop relay information.

Exemplarily, referring to the architecture shown in FIG. 9, the source terminal device (source End UE) can acquire a target terminal device (target End UE) and n relay terminal devices (UE-to-UE Relays) through which the source End UE can communicate with the target End UE (i.e., the above multi-hop relay information, n being a positive integer) through a Discovery process. For example, the source terminal device can establish a connection with the target terminal device through two relay terminal devices currently, and the relay terminal devices include Relay-1 and Relay-2; alternatively, the source terminal device can establish a connection with the target terminal device through three relay terminal devices currently, and the relay terminal devices include Relay-1, Relay-2 and Relay-3.

In some embodiments, during registration, each terminal device may acquire a parameter which is provided by a Policy Control function (PCF) network element to the End UEs and the UE-to-UE Relays and is used during connection establishment, such as a relay service code (RSC) parameter. In addition, the PCF network element can also indicate a number of hops during a multi-hop connection when indicating the RSC parameter, for example, indicate the manner in which the terminal devices use the multi-hop connection, or a maximum number of relays that can be used by the terminal devices.

In some exemplary implementations, the step S11 of acquiring multi-hop relay information includes:
sending a discovery request message, where the discovery request message includes information about the target terminal device; and
receiving a discovery response message from the relay terminal devices, and determining the multi-hop relay information based on the discovery response message, where the multi-hop relay information includes information about the relay terminal devices and multi-hop path information.

The source terminal device (source End UE) determines, through an independent Discovery process, the relay terminal devices (UE-to-UE Relays) through which the source End UE can communicate with the target terminal device (target End UE). In some embodiments, the source terminal device broadcasts a discovery request message which may include target terminal device identification. After receiving the discovery request message and determining that a relay condition is satisfied, neighboring terminal devices may forward the discovery request message to the target terminal device. After receiving the discovery request message forwarded by the neighboring terminal devices, the target terminal device may feed back a discovery response message to the source terminal device through the neighboring terminal devices (as the relay terminal devices). Information about each relay terminal device on a relay path may be included in the discovery response message. Upon reception of the discovery response message forwarded by the relay terminal devices, the source terminal device may determine the relay terminal devices that can be used and a multi-hop path (hop sequence) by using the information about the relay terminal devices contained in the discovery response message and the multi-hop path corresponding to a relay process. The multi-hop path may be represented by identification information of the relay terminal devices.

In some exemplary implementations, the discovery request message sent by the source terminal device may further include hop number indication information for indicating a number of multiple hops to the relay terminal device(s). For example, the hop number indication information of "1" indicates that one relay device is used for a current relay connection, and the hop number indication information of "2" indicates that two relay devices are used for the current relay connection. Alternatively, the hop number indication information of "2" indicates that the multi-hop connection is used, and in this case, a specific number of the hops is not limited.

In an exemplary embodiment, the direct communication request includes any one or any combination of: source terminal device information, relay terminal device information corresponding to each relay terminal device, target terminal device information, hop count information used for indicating a number of hops from a current terminal device to the target terminal device, and a relay service code (RSC).

Device information corresponding to the source terminal device, the target terminal device and each relay terminal device includes terminal device user information identification and layer-2 identification information.

In an exemplary embodiment, the layer-2 identification information corresponding to the source terminal device and the layer-2 identification information corresponding to the target terminal device in the direct communication request are configured based on terminal devices corresponding to a current connection.

In an exemplary embodiment, sequentially initiating the direct communication requests at the relay terminal devices according to the multi-hop relay information includes:
sending a first direct communication request to a first relay terminal device based on the multi-hop relay information.

In some embodiments, after the multi-hop relay information is determined, the source terminal device (source End UE) may first send a first direct communication request (DCR) message to the first relay terminal device (Relay-1); and after a connection between the source End UE and the Relay-1 is established, the first relay terminal device may be triggered to initiate a second direct communication request to a subsequent relay terminal device based on the multi-hop relay information.

For example, the current connection includes two relay terminal devices: the Relay-1 and the Relay-2; the source terminal device (source End UE) may first send the first direct communication request (DCR) message to the first relay terminal device (Relay-1) to initiate establishment of the multi-hop connection between the source End UE and target End UE. After the first relay terminal device processes the first DCR message and a secure connection between the Relay-1 and the source End UE is established, the Relay-1 sends a second DCR message to the second relay terminal device (Relay-2), and a secure connection is established between the Relay-1 and the Relay-2. Then, the Relay-2 may send a third DCR message to the target terminal device (target End UE) and a secure connection between the Relay-2 and the target End UE is established, thereby implementing the multi-hop relay connection between the source terminal device (source End UE) and the target terminal device (target End UE) based on the two relay devices (Relay-1 and Relay-2).

In some embodiments, for the source terminal device, the first DCR message may include: the source terminal device information, the relay terminal device information corresponding to each relay terminal device, the target terminal device information, the hop count information used for indicating the number of hops from the current terminal device to the target terminal device, and the RSC. The source terminal device information may include the terminal device user information identification and the layer-2 identification information corresponding to the source terminal device, i.e., {source End UE User Info ID, source End UE Layer-2 ID}. If the multi-hop path includes two relay terminal devices, the relay terminal device information may include the terminal device user information identification and the layer-2 identification information corresponding to the first relay terminal device, i.e., {Relay-1 User Info ID, Relay-1 Layer-2 ID}, and the terminal device user information identification and the layer-2 identification information corresponding to the second relay terminal device, i.e., {Relay-2 User Info ID, Relay-2 Layer-2 ID}. The target terminal device information may include the terminal device user information identification and the layer-2 identification information corresponding to the target terminal device, i.e., {target End UE User Info ID, target End UE Layer-2 ID}. The hop count information is used to indicate the number of hops from the current terminal device (which is the source terminal device currently) to the target terminal device. For the relay terminal device, the corresponding identification may be used to represent the corresponding multi-hop path; for example, the Relay-1 represents the first relay terminal device corresponding to a first hop, and the Relay-2 represents the second relay terminal device corresponding to a second hop.

Source Layer-2 ID used for sending the first DCR message is configured according to the source End UE Layer-2 ID; and target Layer-2 ID is configured according to the Relay-1 Layer-2 ID acquired in the discovery process. The layer-2 identification information (Layer-2 ID) may be used to instruct the relay terminal device to forward data and signaling between the source terminal device and the target terminal device through layer-2 (e.g., an adaptation layer).

In an exemplary embodiment, the proximity services communication method further includes: receiving first response information, and establishing a connection between the source terminal device and the first relay terminal device.

In some embodiments, between the source terminal device and the first relay terminal device, the first relay terminal device may perform comparison and determination on parameters carried in the first DCR message, including a comparison on the relay terminal device information and a comparison on the RSC parameter. In some embodiments, the first relay terminal device may compare the Relay-1 User Info ID included in the first DCR message with a User Info ID of the relay device Relay-1 to determine whether they match or not; in addition, the first relay terminal device may compare the RSC parameter obtained by the PCF network element with the RSC parameter included in the first DCR message to determine whether they match or not. In a case where the Relay-1 User Info ID included in the first DCR message matches the User Info ID of the relay device Relay-1 and the RSC parameter obtained by the PCF network element also matches the RSC parameter included in the first DCR message, the Relay-1 establishes the secure connection with the source End UE, and can send the first response information to the source terminal device to notify the source terminal device. The first response information is generated after the first relay terminal device processes the first direct communication request.

In an exemplary embodiment, the proximity services communication method further includes: sending, by the source terminal device, a first secure message to the first relay terminal device, to enable the first relay terminal device to determine a PC5 QoS Identifier (PQI) parameter between the source terminal device and the first relay terminal device based on the first secure message.

The first secure message includes at least one of: IP address configuration information or an End-to-End PQI parameter.

In some embodiments, between the source terminal device and the first relay terminal device, the source terminal device, in response to the first response information, may send the first secure message to the Relay-1, send the IP address configuration information which includes IP Address Configuration or a Link-Local IPv6 Address to the Relay-1 through the first secure message, and also send the End-to-End (E2E) PQI parameter, or the like, through the first secure message. The Relay-1 determines, based on the E2E PQI and the hop count, the PQI parameter between the source End UE and the Relay-1 as PQI1.

Similarly, the secure connection between the first relay terminal device and the second relay terminal device, and the secure connection between the second relay terminal device and the target terminal device may also be established in the manner described above.

In an exemplary embodiment, the proximity services communication method further includes: receiving a first direct communication accept message from the first relay terminal device.

In some embodiments, after the target terminal device performs comparison on the second DCR message sent by the second relay terminal device and matching is determined, the target terminal device may feed back a Direct Communication Accept (DCA) message to the second relay terminal device. The second relay terminal device, in response to the DCA message, sends a second DCA message to the first relay terminal device. Then, the first relay terminal device, in response to the second DCA message, sends the first DCA message to the source terminal device, and the source terminal device can receive the first DCA message sent by the first relay terminal device, so as to realize the multi-hop connection. After the connection is established, the source End UE can send an IP data packet to the target End UE through a target End UE IP address.

The first DCA message sent by the Relay-1 and received by the source End UE contains parameters such as target terminal device information {target End UE User Info ID, target End UE Layer-2 ID, target End UE IP address}, relay terminal device information including {Relay-2 User Info ID, Relay-2 Layer-2 ID, Relay-2 IP address} and {Relay-1 User Info ID, Relay-1 Layer-2 ID}, source terminal device information {source End UE User Info ID, source End UE Layer-2 ID}, and PQI1. A source Layer-2 ID is configured based on the Relay-1 Layer-2 ID, and a target Layer-2 ID is configured based on the source End UE Layer-2 ID. The relay terminal device information is used to describe multi-hop relay information, User Info ID of the relay terminal device may be used to indicate basic information of the relay terminal device, and serial numbers of the relay terminal devices such as the Relay-1 and the Relay-2 may be used to indicate the hop sequence of the relay terminal devices in the multi-hop path.

In an embodiment, as shown in FIG. 2, there is provided a proximity services communication method applied to a relay terminal device, including the following steps:
step S21: receiving a first direct communication request of a first terminal device, and verifying the first direct communication request, where the first terminal device includes a source terminal device or a relay terminal device, and the first direct communication request includes multi-hop relay information; and
step S22: initiating a second direct communication request to a second terminal device when verification of the first direct communication request is completed, where the second terminal device includes a target terminal device or a relay terminal device; the multi-hop relay information.

The relay terminal device may interact with the source terminal device and the target terminal device, and may also interact with other neighboring relay terminal device.

In an embodiment, verifying the first direct communication request in the step S21 includes:
comparing relay terminal device information corresponding to the relay terminal device with relay terminal device information contained in the first direct communication request; and/or
comparing a relay service code (RSC) contained in the first direct communication request with an RSC acquired by a PCF network element.

In an embodiment, a direct communication request includes any one or more of: source terminal device information, relay terminal device information corresponding to each relay terminal device, target terminal device information, hop count information used for indicating a number of hops from a current terminal device to the target terminal device, and the RSC. Device information corresponding to each of the source terminal device, the target terminal device and the relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In some embodiments, with an example that the current multi-hop connection includes two relay terminal devices, for the first relay terminal device Relay-1, the corresponding first terminal device is the source terminal device, and the corresponding second terminal device is the second relay terminal device. The Relay-1 may receive and verify the first direct communication request of the source terminal device. In some embodiments, the Relay-1 may compare Relay-1 User Info ID in a first DCR message with User Info ID of the first relay terminal device Relay-1; meanwhile, the Relay-1 may compare the RSC in the first DCR message with the RSC parameter obtained from the PCF; and in a case where the Relay-1 User Info ID in the first DCR message matches User Info ID of the Relay-1 and the RSC in the first DCR message matches the RSC parameter obtained from the PCF, the Relay-1 establishes a secure connection with the source End UE. In addition, the Relay-1 may send a second DCR message to the second relay terminal device.

Alternatively, if the current relay terminal device is Relay-2, the corresponding first terminal device is Relay-1 corresponding to the multi-hop path. After receiving the first direct communication request of the Relay-1, the Relay-2 may perform comparison on each of the RCS parameter and the User Info ID. After verification of the RSC parameter and verification of the User Info ID are successful, the Relay-2 establishes a secure connection with the Relay-1. In addition, the Relay-2 may send a second DCR message to the target terminal device.

In an embodiment, when the verification of the first direct communication request is successful, the proximity services communication method further includes: sending first response information to the first terminal device, and establishing a connection between the relay terminal device and the first terminal device.

In some embodiments, upon successful matching of parameters, the Relay-1 establishes the secure connection with the source End UE, and may send the first response information to the source End UE to notify the source End UE that the verification is successful and the connection is established. Alternatively, if the Relay-1 fails to match any one of the parameters, the Relay-1 may feed back matching failure response information to the source End UE to notify the source End UE that the multi-hop relay connection cannot be established.

In an embodiment, the proximity services communication method further includes: receiving a secure message sent by the first terminal device, and determining a PQI parameter between the first terminal device and the relay terminal device based on the secure message, where the secure message includes at least one of: IP address configuration information or an End-to-End PQI parameter.

In some embodiments, the source End UE, in response to the received first response information, sends the secure message to the Relay-1, and sends parameters such as an E2E PQI, and IP Address Configuration or a Link-Local IPv6 Address to the Relay-1 through the secure message. The Relay-1 determines the PQI parameter between the source End UE and the Relay-1 as PQI1 based on the E2E PQI and a hop count.

In an embodiment, the proximity services communication method further includes: receiving a second direct communication accept message of the second terminal device, and sending a first direct communication accept message to the first terminal device.

Exemplarily, the current multi-hop connection includes two relay terminal devices, and if the current relay terminal device is the Relay-1, the corresponding second terminal device is the Relay-2, and the corresponding first terminal device is the source terminal device. Alternatively, if the current relay terminal device is the Relay-2, the corresponding second terminal device is the target terminal device, and the corresponding first terminal device is the Relay-1.

In some embodiments, when the Relay-1 completes the verification of the first DCR message and establishes the secure connection with the source End UE, the Relay-1 sends the second DCR message to the second relay terminal device Relay-2. The second DCR message includes parameters such as source terminal device information {source End UE User Info ID, source End UE User Info ID}; relay device information, where the relay device information includes first relay device information {Relay-1 User Info ID, Relay-1 Layer-2 ID} and second relay device information {Relay-2 User Info ID, Relay-2 Layer-2 ID}; {target End UE User Info ID, target End UE Layer-2 ID}; an RSC; and hop count-1. A source Layer-2 ID in the second DCR message is configured based on the Relay-1 Layer-2 ID of the first relay terminal device, and a target Layer-2 ID is configured based on the Relay-2 Layer-2 ID of the second relay terminal device.

The Relay-2 verifies the second DCR message after receiving the second DCR message. The Relay-2 compares the Relay-2 User Info ID in the second DCR message with the User Info ID of the second relay terminal device Relay-2, and compares the RSC obtained from the PCF network element with the RSC parameter in the second DCR message. When the verification is completed, the Relay-2 sends second response information to the Relay-1; the Relay-1 sends a secure message to the Relay-2 and sends parameters such as IP Address Configuration or a Link-Local IPv6 Address, and {E2E PQI-PQI1} to the Relay-2 through the secure message. Based on {E2E PQI-PQI1} and the hop count-1, the Relay-2 determines that a PQI parameter between the Relay-1 and the Relay-2 is PQI2, and a PQI parameter between the Relay-2 and the target End UE is {E2E PQI-PQI1-PQI2}.

After establishing the secure connection with the Relay-1, the Relay-2 may send a third DCR message to the target End UE, and the third DCR message includes parameters such as source terminal device information {source End UE User Info ID, source End UE Layer-2 ID}, relay device information {Relay-1 User Info ID, Relay-1 Layer-2 ID} and {Relay-2 User Info ID, Relay-2 Layer-2 ID}, target terminal device information {target End UE User Info ID, target End UE Layer-2 ID}, and an RSC. A source Layer-2 ID is configured based on the second relay terminal device Relay-2 Layer-2 ID, and a target Layer-2 ID is configured based on the target terminal device target End UE Layer-2 ID.

The target End UE verifies the received third DCR message, compares the target End UE User Info ID in the third DCR message with the User Info ID of the target terminal device (target End UE), and compares the RSC contained in the third DCR message with the RSC parameter obtained from the PCF network element; and upon successful matching of both parameters, the target End UE establishes a secure connection with the Relay-2. The Relay-2 sends parameters such as IP Address Configuration or a Link-Local IPv6 Address, and {E2E PQI-PQI1-PQI2} to the target End UE through a secure message.

In an embodiment, if the current multi-hop connection includes three relay terminal devices, after successfully verifying the second DCR message, the Relay-2 may send the third DCR message to the third relay terminal device Relay-3, the Relay-3 verifies the third DCR message, and after the verification succeeds, the Relay-3 sends a fourth DCR message to the target terminal device, and the target terminal device verifies the fourth DCR message.

Exemplarily, after the connection is established between the target End UE and the Relay-2, the target terminal device may send a Direct Communication Accept (DCA) message to the Relay-2, and the DCA message includes parameters such as {target End UE User Info ID, target End UE Layer-2 ID}, {Relay-2 User Info ID, Relay-2 Layer-2 ID}, {Relay-1 User Info ID, Relay-1 Layer-2 ID}, and {source End UE User Info ID, and source End UE Layer-2 ID}. A source Layer-2 ID used for sending the DCA message is configured based on the target End UE Layer-2 ID of the target terminal device, and a target Layer-2 ID is configured based on the Relay-2 Layer-2 ID of the second relay terminal device.

The Relay-2 may send a DCA message to the Relay-1 after receiving the DCA message from the target End UE. The DCA message sent to the Relay-1 includes parameters such as target terminal device information {target End UE User Info ID, target End UE Layer-2 ID, target End UE IP address}, relay terminal device information {Relay-2 User Info ID, Relay-2 Layer-2 ID} and {Relay-1 User Info ID, Relay-1 Layer-2 ID}, source terminal device information {source End UE User Info ID, source End UE Layer-2 ID}, and PQI2. A source Layer-2 ID is configured based on the Relay-2 Layer-2 ID of the second relay terminal device, and a target Layer-2 ID is configured based on the Relay-1 Layer-2 ID of the first relay terminal device.

After receiving the DCA message of the Relay-2, the Relay-1 sends a DCA message to the source terminal device (source End UE), and the DCA message sent to the source End UE includes parameters such as target terminal device information {target End UE User Info ID, target End UE Layer-2 ID, target End UE IP address}, relay terminal device information {Relay-2 User Info ID, Relay-2 Layer-2 ID, Relay-2 IP address} and {Relay-1 User Info ID, Relay-1 Layer-2 ID}, source terminal device information {source End UE User Info ID, source End UE Layer-2 ID}, and PQI1. A source Layer-2 ID for sending the DCA message is configured based on the Relay-1 Layer-2 ID of the first relay terminal device, and a target Layer-2 ID is configured based on the source End UE Layer-2 ID of the source terminal device.

After the connection is established, the source End UE can send an IP data packet to the target End UE through the target End UE IP address.

In an embodiment, the target terminal device may verify the direct communication request received from the relay terminal device. For example, when the current multi-hop connection includes two relay terminal devices, the target terminal device receives the direct communication request of the second relay terminal device and performs verification; or, when the current multi-hop connection includes three relay terminal devices, the target terminal device receives the direct communication request of the third relay device, and performs verification.

The target terminal device verifies the received DCR message, which includes: comparing the target End UE User Info ID in the DCR message with the User Info ID of the target terminal device (target End UE), and comparing the RSC contained in the DCR message with the RSC parameter obtained from the PCF network element; and when the target End UE User Info ID in the DCR message matches the User Info ID of the target End UE and the RSC contained in the DCR message matches the RSC parameter obtained from the PCF network element, the target End UE establishes the secure connection with the Relay-2 (or Relay-3). The Relay-2 sends parameters such as IP Address Configuration or a Link-Local IPv6 Address, and {E2E PQI-PQI1-PQI2} to the target End UE in a secure message. The target End UE sends a DCA message to the Relay-2 (or Relay-3). Therefore, the Relay-2 can send a DCA request to another relay terminal device along a reverse direction of the multi-hop path, and the another relay terminal device can send a DCA message to the source terminal device, thereby completing the establishment of the multi-hop connection.

In an exemplary embodiment, referring to FIG. 3, corresponding to a system architecture shown in FIG. 8, a multi-hop UE-to-UE Relay connection establishment process provided with an independent Discovery process may include the following steps 0-9.

In step 0, a source End UE discovers, by means of the Discovery process, a target End UE as well as Relay-1 and Relay-2 through which the source End UE can communicate with the target End UE. The source End UE obtains target terminal device information {target End UE User Info ID, target End UE Layer-2 ID}, and relay terminal device information {Relay-1 User Info ID, Relay-1 Layer-2 ID} and {Relay-2 User Info ID, Relay-2 Layer-2 ID}. The Relay-1 Layer-2 ID is a Layer-2 ID designated by the Relay-1 for a subsequent communication process. The target End UE Layer-2 ID and the Relay-2 Layer-2 ID are obtained in a similar manner as the Relay-1.

In step 1, the source End UE sends a DCR message to the Relay-1 to initiate establishment of a multi-hop connection between the source End UE and the target End UE. The DCR message contains parameters such as source terminal device information {source End UE User Info ID, source End UE Layer-2 ID}, relay terminal device information {Relay-1 User Info ID, Relay-1 Layer-2 ID} and {Relay-2 User Info ID, Relay-2 Layer-2 ID}, target relay terminal device information {target End UE User Info ID, target End UE Layer-2 ID}, an RSC, and a hop count. The hop count is used to indicate a number of hops from a current UE (source End UE or Relay UE) to the target End UE.

A source Layer-2 ID used for sending the DCR is the source End UE Layer-2 ID, and a target Layer-2 ID is set to the Relay-1 Layer-2 ID obtained in step 0.

In step 2, if the Relay-1 verifies that the Relay-1 User Info ID in the DCR matches the User Info ID of the Relay-1, and an RSC obtained by the Relay-1 from a PCF network element matches the RSC in the DCR, the Relay-1 establishs a secure connection with the source End UE. The source End UE sends parameters such as IP Address Configuration or a Link-Local IPv6 Address, and an E2E PQI to the Relay-1 in a secure message. The Relay-1 determines, based on the E2E PQI and the hop count, a PQI parameter between the source End UE and the Relay-1 as PQI1.

In step 3, the Relay-1 sends a DCR message to the Relay-2. The DCR message contains parameters such as source terminal device information {source End UE User Info ID, source End User Info ID}, relay terminal device information {Relay-1 User Info ID, Relay-1 Layer-2 ID} and {Relay-2 User Info ID, Relay-2 Layer-2 ID}, target terminal device information {target End UE User Info ID, target End UE Layer-2 ID}, an RSC, and hop count-1.

A source Layer-2 ID for sending the DCR message is set to the Relay-1 Layer-2 ID obtained in step 1, and a target Layer-2 ID is set to the Relay-2 Layer-2 ID obtained in step 1.

In step 4, if the Relay-2 verifies that the Relay-2 User Info ID in the DCR message matches the User Info ID of the Relay-2, and an RSC obtained by the Relay-2 from the PCF network element matches the RSC in the DCR, the Relay-2 establishs a secure connection with the Relay-1. The Relay-1 sends parameters such as IP Address Configuration or a Link-Local IPv6 Address, and {E2E PQI-PQI1} to the Relay-2 in a secure message. Based on {E2E PQI-PQI1} and the hop count-1, the Relay-2 determines that a PQI parameter between the Relay-1 and the Relay-2 is PQI2, and a PQI parameter between the Relay-2 and the target End UE is {E2E PQI-PQI1-PQI2}.

In step 5, the Relay-2 sends a DCR message to the target End UE, and the DCR message includes parameters such as source terminal device information {source End UE User Info ID, source End UE Layer-2 ID}, relay terminal device information {Relay-1 User Info ID, Relay-1 Layer-2 ID} and {Relay-2 User Info ID, Relay-2 Layer-2 ID}, target terminal device information {target End UE User Info ID, target End UE Layer-2 ID}, and an RSC.

A source Layer-2 ID used for sending the DCR message is set to the Relay-2 Layer-2 ID obtained in step 3, and a target Layer-2 ID is set to the target End UE Layer-2 ID obtained in step 3.

In step 6, if the target End UE verifies that the target End UE User Info ID in the DCR matches the User Info ID of the target End UE, and an RSC obtained by the target End UE from the PCF network element matches the RSC in the DCR, the target End UE establishs a secure connection with the Relay-2. The Relay-2 sends parameters such as IP Address Configuration or a Link-Local IPv6 Address, and {E2E PQI-PQI1-PQI2} to the target End UE in a secure message.

In step 7, the target End UE sends a DCA message to the Relay-2, and the DCA message includes parameters such as target terminal device information {target End UE User Info ID, target End UE Layer-2 ID}, relay terminal device information {Relay-2 User Info ID, Relay-2 Layer-2 ID} and {Relay-1 User Info ID, Relay-1 Layer-2 ID}, and source terminal device information {source End UE User Info ID, source End UE Layer-2 ID}.

A source Layer-2 ID used for sending the DCA message is set to the target End UE Layer-2 ID obtained in step 5, and a target Layer-2 ID is set to the Relay-2 Layer-2 ID obtained in step 5.

In step 8, in response to the DCA message sent by the target End UE, the Relay-2 sends a DCA message to the Relay-1, the DCA message sent to the Relay-1 includes parameters such as target terminal device information {target End UE User Info ID, target End UE Layer-2 ID, target End UE IP address}, relay terminal device information {Relay-2 User Info ID, Relay-2 Layer-2 ID} and {Relay-1 User Info ID, Relay-1 Layer-2 ID}, source terminal device information {source End UE User Info ID, source End UE Layer-2 ID}, and PQI2.

A source Layer-2 ID used for sending the DCA message is set to the Relay-2 Layer-2 ID obtained in step 7, and a target Layer-2 ID is set to the Relay-1 Layer-2 ID obtained in step 7.

In step 9, in response to the DCA message sent by the Relay-2, the Relay-1 sends a DCA message to the source End UE, and the DCA message sent to the source End UE includes parameters such as target terminal device information {target End UE User Info ID, target End UE Layer-2 ID, target End UE IP address}, relay terminal device information {Relay-2 User Info ID, Relay-2 Layer-2 ID, Relay-2 IP address} and {Relay-1 User Info ID, Relay-1 Layer-2 ID}, source terminal device information {source End UE User Info ID, source End UE Layer-2 ID}, and PQI1.

A source Layer-2 ID used for sending the DCA message is set to the Relay-1 Layer-2 ID obtained in step 8, and a target Layer-2 ID is set to the source End UE Layer-2 ID obtained in step 8.

After the connection is established, the source End UE can send an IP data packet to the target End UE through the target End UE IP address.

In another embodiment, there is provided a proximity services communication method, which can be applied to a system architecture shown in FIG. 9. In some embodiments, the communication method may be applied to a source terminal device.

In some embodiments, the source terminal device (source End UE) can broadcast a first DCR message, and the DCR message may include parameters such as source terminal device information {source End UE User Info ID, source End UE Layer-2 ID}, target terminal device information: target End UE User Info ID, and an RSC. The source End UE Layer-2 ID is a Layer-2 ID specified by the source End UE for a subsequent connection establishment process. A source Layer-2 ID used for sending the DCR message is the source End UE Layer-2 ID, and a target Layer-2 ID is set as a default Layer-2 ID provided by a PCF network element.

In some exemplary embodiments, the DCR message sent by the source terminal device may further include information indicating a number of times that the DCR message may be forwarded by relay terminal device(s). For example, the indication information may be used to indicate a single hop or multiple hops; alternatively, a specific number of hops may be indicated, such as 2 hops or 3 hops.

In addition, the DCR message may also carry a relay terminal device performance threshold parameter for screening the relay terminal device. For example, the performance threshold may be signal strength between a neighboring relay terminal device and the source terminal device, or a signal strength threshold of the relay terminal device.

After receiving the first DCR message, a terminal device close to the source terminal device serves as the relay terminal device such as a first relay terminal device Relay-1 and a second relay terminal device Relay-2. The relay terminal device processes the first DCR message and then broadcasts a second DCR message; and the second DCR message may include parameters such as source terminal device information {source End UE User Info ID, source End UE Layer-2 ID}, target terminal device information: target End UE User Info ID, relay terminal device information {Relay-1 User Info ID, Relay-1 Layer-2 ID} or {Relay-2 User Info ID, Relay-2 Layer-2 ID}, and an RSC. The Relay-1/Relay-2 Layer-2 ID is a Layer-2 ID which is specified by the Relay-1/Relay-2 for the subsequent connection establishment process. A source Layer-2 ID used by the relay terminal device to send the second DCR message is the Relay-1 Layer-2 ID or Relay-2 Layer-2 ID, and a target Layer-2 ID is set to a default Layer-2 ID provided by the PCF network element.

The second DCR message broadcast by the relay terminal device can be received by another neighboring relay terminal device, and sending of a third DCR message may be triggered. Alternatively, the second DCR message may be received by a target terminal device (target End UE). The target terminal device (target End UE) determines a multi-hop path according to the received DCR messages broadcast by the respective relay terminal devices, feeds back multiple DCA messages to the corresponding relay terminal devices and the source terminal device along the multi-hop path, and the source terminal device establishes a secure connection based on the DCA messages of the relay terminal devices, thereby establishing a multi-hop connection between the source terminal device and the target terminal device.

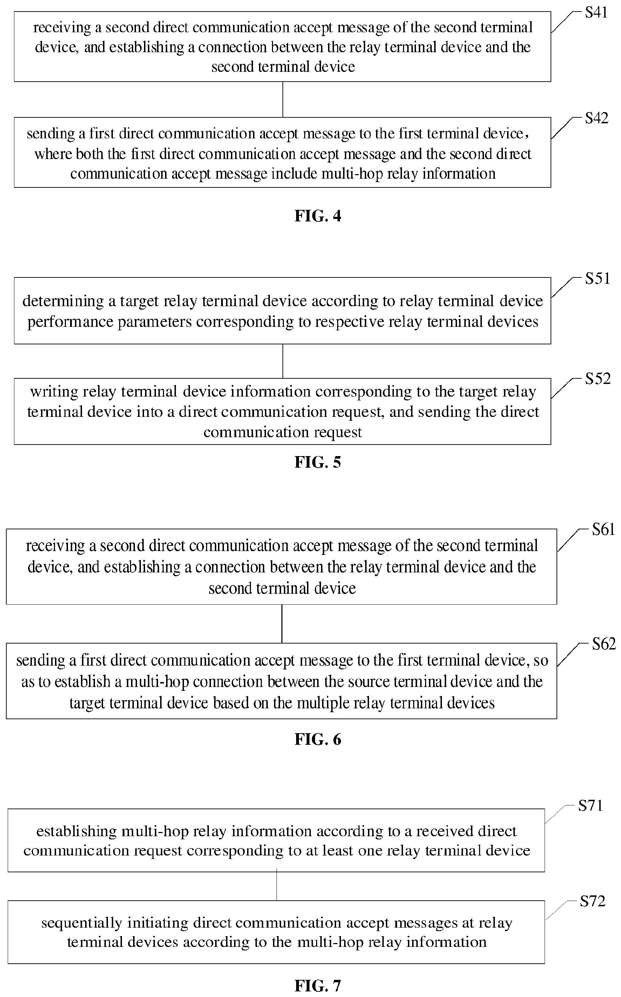

In another embodiment, referring to FIG. 4, there is provided a proximity services communication method applied to a relay terminal device, including the following steps:
step S41: receiving a first direct communication request of a first terminal device, where the first terminal device includes a source terminal device or a relay terminal device; and
step S42: generating a second direct communication request based on relay terminal device information, and sending the second direct communication request to a second terminal device, where the second direct communication request includes relay terminal device information, and the second terminal device includes a relay terminal device and/or a target terminal device.

In an embodiment, the first direct communication request includes source terminal device information, target terminal device information and a relay service code (RSC); or, the first direct communication request includes source terminal device information, target terminal device information, an RSC and information about at least one relay terminal device.

The second direct communication request includes source terminal device information, target terminal device information, an RSC and information about at least one relay terminal device.

Device information corresponding to each of the source terminal device, the target terminal device and the relay terminal device includes terminal device user information identification and layer-2 identification information.

Exemplarily, for the relay terminal device, the first terminal device may be the source terminal device, and accordingly, the second terminal device may be another neighboring relay terminal device.

In some embodiments, after receiving the first DCR message broadcast by the neighboring source terminal device, the relay terminal device processes the first DCR message, and broadcasts the second DCR message; and the second DCR message may include parameters such as source terminal device information {source End UE User Info ID, source End UE Layer-2 ID}, target terminal device information: target End UE User Info ID, relay terminal device information {Relay-1 User Info ID, Relay-1 Layer-2 ID} or {Relay-2 User Info ID, Relay-2 Layer-2 ID}, and an RSC. The Relay-1/Relay-2 Layer-2 ID is a Layer-2 ID which is specified by the Relay-1/Relay-2 for the subsequent connection establishment process. A source Layer-2 ID used by the relay terminal device to send the second DCR message is the Relay-1 Layer-2 ID or Relay-2 Layer-2 ID, and a target Layer-2 ID is set to a default Layer-2 ID provided by a PCF network element.

Exemplarily, for the relay terminal device, the first terminal device may be a neighboring relay terminal device, and the second terminal device may be another neighboring relay terminal device or the target terminal device.

In some embodiments, the second DCR message broadcast by the relay terminal device may be received by another neighboring relay terminal device, for example, by a third relay terminal device Relay-3, and after processing the second DCR message, the Relay-3 may broadcast a third DCR message. The third relay terminal device may receive the second DCR message(s) broadcast by one or more neighboring relay terminal devices.

In an exemplary embodiment, the DCR message received by the relay terminal device may also carry a relay terminal device performance threshold parameter used to screen the relay terminal device. For example, the threshold may be signal strength between a neighboring relay terminal device and the source terminal device, or a signal strength threshold of the relay terminal device. After receiving the DCR message, the relay terminal device may first determine whether the DCR message meets a threshold requirement, and if the threshold requirement is met, the relay terminal device continues to process the DCR message currently received; or if the threshold requirement is not met, the relay terminal device does not process the current DCR message.

In an embodiment, the first direct communication request and/or the second direct communication request further includes: a relay terminal device performance parameter.

The relay terminal device performance parameter includes at least one of: a signal strength parameter between the relay terminal device and the source terminal device, or a load parameter of the relay terminal device.

In some embodiments, the second DCR message broadcast by the relay terminal device may be received by another neighboring relay terminal device, for example, by a third relay terminal device Relay-3, and a third DCR message is broadcast. The third relay terminal device may receive the second DCR message(s) broadcast by one or more neighboring relay terminal devices. The third DCR message broadcast by the Relay-3 may include parameters such as source terminal device information {source End UE User Info ID, source End UE Layer-2 ID}; target terminal device information: target End UE User Info ID; relay terminal device information: {Relay-1 User Info ID, Relay-1 Layer-2 ID} and/or {Relay-2 User Info ID, Relay-2 Layer-2 ID}, and {Relay-3 User Info ID, Relay-3 Layer-2 ID}; and an RSC. The Relay-3 Layer-2 ID is a Layer-2 ID designated by the Relay-3 for a subsequent connection establishment process. A source Layer-2 ID used for sending the third DCR message is the Relay-3 Layer-2 ID, and a target Layer-2 ID is set as a default Layer-2 ID provided by the PCF network element. The third DCR message may further include signal strength information between the source End UE and the Relay-1 (or Relay-2), and signal strength information between the Relay-1 (or Relay-2) and the Relay-3.

In an embodiment, referring to FIG. 5, the proximity services communication method further includes:
step S51: determining a target relay terminal device according to relay terminal device performance parameters corresponding to respective relay terminal devices; and
step S52: writing relay terminal device information corresponding to the target relay terminal device into a direct communication request, and sending the direct communication request.

The DCR message may further include a device performance parameter of adjacent terminal devices. For example, the second DCR message broadcast by the Relay-1 may include a signal strength parameter between the source terminal device and the first relay terminal device, or a load parameter of the first terminal device.

Alternatively, the third relay terminal device, when receiving the second DCR messages broadcast by multiple other neighboring relay terminal devices, may pre-select a relay terminal device in a relay multi-hop path according to the performance parameters of the relay terminal devices. For example, when the Relay-3 receives the second DCR messages broadcast by the Relay-1 and the Relay-2, a relay terminal device with a better transmission performance can be selected as the target relay terminal device based on the relay terminal device performance parameters, and the multi-hop path is configured for the target terminal device in advance, so that a calculation pressure of the target terminal device is reduced, and a transmission efficiency is improved.

For example, the Relay-3 may select the Relay-1 or Relay-2 based on the signal strength information between the source End UE and the Relay-1 (or Relay-2) and the signal strength information between the Relay-1 (or Relay-2) and the Relay-3, and in this case, only the User Info ID and Layer-2 ID of the Relay-1 or of the Relay-2 are included in the DCR message (but not the User Info IDs and Layer-2 IDs of both the Relay-1 and Relay-2).

In an embodiment, referring to FIG. 6, the proximity services communication method further includes:
step S61: receiving a second direct communication accept message of the second terminal device, and establishing a connection between the relay terminal device and the second terminal device; and
step S62: sending a first direct communication accept message to the first terminal device.

Both the first direct communication accept message and the second direct communication accept message include multi-hop relay information.

In an embodiment, each of the first direct communication accept message and the second direct communication accept message further includes: source terminal device information, target terminal device information, and hop count information used for indicating a number of hops from a current terminal device to the target terminal device.

Device information corresponding to each of the source terminal device, the target terminal device and the relay terminal device includes terminal device user information identification and layer-2 identification information.

In an embodiment, the layer-2 identification information corresponding to the source terminal device and the layer-2 identification information corresponding to the target terminal device are configured based on terminal devices corresponding to a current connection.

In an embodiment, the multi-hop relay information includes: relay terminal device information and multi-hop path information.

In some embodiments, the relay terminal device on the multi-hop path may receive the DCA message sent by the target terminal device, and establish the secure connection between the relay terminal device and the target terminal device. For example, the target terminal device may determine the multi-hop path based on received DCR message(s) broadcast by one or more relay terminal devices. With the multi-hop path including two relay terminal devices (Relay-3 and Relay-2) as an example, if the current relay terminal device is the Relay-3, the corresponding second terminal device is the target terminal device, and the corresponding first terminal device is the Relay-2. Alternatively, if the current relay terminal device is the Relay-2, the corresponding second terminal device is the Relay-3, and the corresponding first terminal device is the source terminal device.

The Relay-3 can receive a DCA message sent by the target terminal device, and the DCA message may include target terminal device information {target End UE User Info ID, target End UE Layer-2 ID}, relay terminal device information {Relay-3 User Info ID, Relay-3 Layer-2 ID} and {Relay-2 User Info ID, Relay-2 Layer-2 ID}, source terminal device information {source End UE User Info ID, source End UE Layer-2 ID}, IP Address Configuration or a Link-Local IPv6 Address, and a hop number. The target End UE Layer-2 ID is a Layer-2 ID specified by the target End UE for a subsequent connection establishment process. The hop number is used to indicate a number of hops from the current UE (source End UE or Relay UE) to the target End UE. A source Layer-2 ID used by the target terminal device to send the DCA message is the target End UE Layer-2 ID, and a target Layer-2 ID is the Relay-3 Layer-2 ID. In the relay terminal device information, the User Info ID may be used to indicate user information of the relay terminal device in a multi-hop relay information packet. Serial numbers of the relay terminal devices may be used to indicate a hop sequence corresponding to the multi-hop path, for example, a hop sequence of Relay-2 and Relay-3. Alternatively, a sequence number identification of a hop sequence may be configured in information about each relay terminal device.

After receiving the DCA message sent by the target terminal device, the Relay-3 may send a DCA message to the Relay-2, and a secure connection may be established between the Relay-3 and the Relay-2. The Relay-2 may send parameters such as IP Address Configuration or a Link-Local IPv6 Address to the Relay-3 in a secure message. The DCA message sent by the Relay-3 to the Relay-2 may include target terminal device information {target End UE User Info ID, target End UE Layer-2 ID, target End UE IP address}, relay terminal device information {Relay-3 User Info ID, Relay-3 Layer-2 ID} and {Relay-2 User Info ID, Relay-2 Layer-2 ID}, and source terminal device information {source End UE User Info ID, source End UE Layer-2 ID}. A source Layer-2 ID used by the Relay-3 for sending the DCA message is the Relay-3 Layer-2 ID, and a target Layer-2 ID is the Relay-2 Layer-2 ID.

After the Relay-2 receives the DCA message sent by the Relay-3, a secure connection is established between the Relay-2 and the source End UE. The source End UE sends IP Address Configuration or a Link-Local IPv6 Address, and an E2E PQI to the Relay-2 in a secure message.

The Relay-2 determines, based on the E2E PQI and the hop number, a PQI value between the source End UE and the Relay-2 as PQI1. The Relay-2 sends an LMR message to the Relay-3, and the LMR message includes target terminal device information {target End UE User Info ID, target End UE Layer-2 ID}, relay terminal device information {Relay-3 User Info ID, Relay-3 Layer-2 ID} and {Relay-2 User Info ID, Relay-2 Layer-2 ID}, E2E PQI-PQI1, and a hop number. The Relay-3 determines, based on the received E2E PQI-PQI1 and hop number, a PQI value between the Relay-2 and the Relay-3 to be PQI2. The Relay-3 sends an LMR message to the target End UE, and the LMR message includes target terminal device information {target End UE User Info ID, target End UE Layer-2 ID}, relay terminal device information {Relay-3 User Info ID, Relay-3 Layer-2 ID} and {Relay-2 User Info ID, Relay-2 Layer-2 ID}, E2E PQI-PQI1-PQI2, and a hop number. The target End UE sends an LMA message to the Relay-3, and the Relay-3 sends an LMA message to the Relay-2.

In addition, the Relay-2, in response to the DCA message received from the Relay-3, sends a DCA message to the source End UE, and the DCA message sent to the source End UE includes target terminal device information {target End UE User Info ID, target End UE Layer-2 ID, target End UE IP address}, relay terminal device information {Relay-3 User Info ID, Relay-3 Layer-2 ID, Relay-3 IP address} and {Relay-2 User Info ID, Relay-2 Layer-2 ID}, source terminal device information {source End UE User Info ID, source End UE Layer-2 ID}, IP Address Configuration or a Link-Local IPv6 Address, and PQI1. A source Layer-2 ID used by the Relay-2 for sending the DCA message is the Relay-2 Layer-2 ID, and a target Layer-2 ID is the source End UE Layer-2 ID.

After the connection is established, the source End UE can send an IP data packet to the target End UE through the target End UE IP address.

In another embodiment, referring to FIG. 7, there is provided a proximity services communication method applied to a target terminal device, including the following steps:
step S71: establishing multi-hop relay information according to a received direct communication request corresponding to at least one relay terminal device; and
step S72: sequentially initiating direct communication accept messages at relay terminal devices according to the multi-hop relay information.

In an embodiment, the direct communication request includes a relay terminal device performance parameter.

In an embodiment, establishing the multi-hop relay information according to the received direct communication request corresponding to the at least one relay terminal device includes:
sorting respective relay terminal devices according to the relay terminal device performance parameters; and
selecting a target relay terminal device based on a sorting result, and generating the multi-hop relay information.

In some embodiments, the target terminal device may receive a second DCR message and/or a third DCR message broadcast by multiple neighboring relay terminal devices. The second DCR message is generated by the relay terminal device based on a first DCR message received from a source terminal device. The third DCR message may be generated by the relay terminal device based on the second DCR message received from another neighboring relay terminal device.

The target terminal device may sort the multiple relay terminal devices according to signal strength information between the source terminal device and the relay terminal device and signal strength information between the relay terminal devices, or according to load information of the relay terminal devices, where the signal strength information or the load information is carried in each DCR message, select n relay terminal devices as target relay terminal devices, and determine a corresponding hop sequence, thereby determining the multi-hop relay information.

In addition, in some exemplary embodiments, the discovery request message sent by the source terminal device may further include hop number indication information for indicating a number of multiple hops to the relay terminal device. When the relay terminal device generates a new DCR message, the hop number indication information of the source terminal device may be carried, to enable the target terminal device to obtain the indication information, select a certain number of relay terminal devices according to the indication information, and configure a corresponding hop path. For example, the hop number indication information of "1" indicates that one relay device is used for the current relay connection; and the hop number indication information of "2" indicates that two relay devices are used for the current relay connection. Alternatively, the hop number indication information of "2" indicates that the multi-hop connection is used, and in this case, a specific number of the hops is not limited.

For example, the multi-hop relay information includes two relay terminal devices, and the multi-hop path is Relay-3 and Relay-2. The target terminal device can firstly establish a secure connection with the Relay-3 and the Relay-3 sends a DCA message; and then, the Relay-3 sends a DCA message to the Relay-2, and the Relay-2 sends a DCA message to the source terminal device (source End UE), thereby establishing a multi-hop connection.

In an embodiment, a direct communication request includes: a target relay terminal device configured by a relay terminal device.

The proximity services communication method further includes: establishing the multi-hop relay information based on the target relay terminal device.

In some embodiments, the target terminal device may simultaneously receive a second DCR message and/or a third DCR message from different relay terminal devices. The second DCR message is generated by the relay terminal device based on a first DCR message received from the source terminal device. The third DCR message is generated by the relay terminal device based on the second DCR message received from another neighboring relay terminal device. The third DCR message may include information about multiple relay terminal devices that participate in DCR message transmissions.

Exemplarily, the third DCR message may further include a target relay terminal device determined by a corresponding relay terminal device. For example, the target terminal device receives the third DCR message broadcast by the Relay-3, and the third DCR message includes the Relay-2 selected by the Relay-3 as the target relay terminal device based on signal strengths contained in received second DCR messages broadcast by the Relay-1 and the Relay-2. When the target terminal device selects the Relay-3 as one target relay terminal device, the target terminal device can further determine the Relay-2 as one target relay terminal device according to the third DCR message. Correspondingly, the sequence of the hop path includes: the Relay-3 and the Relay-2. That is, the target terminal device may configure the multi-hop relay information according to a multi-hop path selected by the relay terminal device.

In an exemplary embodiment, corresponding to the system architecture shown in FIG. 9, referring to FIG. 8, a multi-hop UE-to-UE Relay connection establishment process includes the following steps 1-11.

In step 1, the source End UE sends a DCR. The DCR message is a broadcast message. The message contains parameters such as source terminal device information {source End UE User Info ID, source End UE Layer-2 ID}, target terminal device information: target End UE User Info ID, and an RSC. The source End UE Layer-2 ID is a Layer-2 ID specified by the source End UE for a subsequent connection establishment process. A source Layer-2 ID used for sending the DCR message is the source End UE Layer-2 ID, and a target Layer-2 ID is set as a default Layer-2 ID provided by a PCF network element.

In step 2, after receiving the DCR message broadcast by the source terminal device, neighboring relay terminal devices Relay-1 or Relay-2 can each send a new DCR message, these new DCR messages are broadcast messages. The DCR message includes parameters such as source terminal device information {source End UE User Info ID, source End UE Layer-2 ID}, target End UE User Info ID, relay terminal device information {Relay-1 User Info ID, Relay-1 Layer-2 ID} or {Relay-2 User Info ID, Relay-2 Layer-2 ID}, and an RSC. The Relay-1/Relay-2 Layer-2 ID is a Layer-2 ID which is specified by the Relay-1/Relay-2 for the subsequent connection establishment process. The DCR message sent by the Relay-1/Relay-2 may also contain signal strength information between the source End UE and the Relay-1 or between the source End UE and the Relay-2.

A source Layer-2 ID used for sending the above DCR message is the Relay-1 Layer-2 ID or Relay-2 Layer-2 ID, and a target Layer-2 ID is set to a default Layer-2 ID provided by the PCF network element.

In step 3, after receiving the DCR messages respectively broadcast by the neighboring relay terminal devices Relay-1 and Relay-2, the Relay-3 sends a new DCR, the new DCR message being a broadcast message. The DCR message sent by the Relay-3 includes parameters such as source terminal device information {source End UE User Info ID, source End UE Layer-2 ID}, target terminal device information: target End UE User Info ID, relay terminal device information {Relay-1 User Info ID, Relay-1 Layer-2 ID}, {Relay-2 User Info ID, Relay-2 Layer-2 ID} and {Relay-3 User Info ID, Relay-3 Layer-2 ID}, and an RSC. Relay-3 Layer-2 ID is a Layer-2 ID designated by the Relay-3 for a subsequent connection establishment process. The DCR message sent by the Relay-3 may further include signal strength information between the source End UE and the Relay-1 (or Relay-2) and signal strength information between the Relay-1 (or Relay-2) and the Relay-3. Alternatively, the Relay-3 may select the Relay-1 or Relay-2 according to the signal strength information between the source End UE and the Relay-1 (or Relay-2) and the signal strength information between the Relay-1 (or Relay-2) and the Relay-3, and in this case, only the User Info ID and Layer-2 ID of the Relay-1 or Relay-2 are included in the DCR sent by the Relay-3 (but not the User Info IDs and Layer-2 IDs of both the Relay-1 and the Relay-2 are included).

A source Layer-2 ID used for sending the DCR message is the Relay-3 Layer-2 ID, and a target Layer-2 ID is set as a default Layer-2 ID provided by the PCF.

In step 4, the target End UE can receive the DCR messages broadcast by respective relay terminal devices, and select a UE-to-UE Relay list for response such as the Relay-3 and the Relay-2 according to the signal strength information between the source End UE and the Relay-1 (or Relay-2), the signal strength information between the Relay-1 (or Relay-2) and the Relay-3, and the signal strength information between the Relay-3 and the target End UE.

In step 5, a secure connection is established between the target End UE and the Relay-3. The Relay-3 sends IP Address Configuration or a Link-Local IPv6 Address to the target End UE in a secure message.

In step 6, the target End UE sends a DCA message to the Relay-3, and the message includes target terminal device information {target End UE User Info ID, target End UE Layer-2 ID}, relay terminal device information {Relay-3 User Info ID, Relay-3 Layer-2 ID} and {Relay-2 User Info ID, Relay-2 Layer-2 ID}, source terminal device information {source End UE User Info ID, source End UE Layer-2 ID}, IP Address Configuration or a Link-Local IPv6 Address, and a hop number. The target End UE Layer-2 ID is a Layer-2 ID specified by the target End UE for a subsequent connection establishment process. The hop number is used to indicate a number of hops from a current UE (source End UE or Relay UE) to the target End UE.

A source Layer-2 ID used for sending the DCA message is the target End UE Layer-2 ID, and a target Layer-2 ID is the Relay-3 Layer-2 ID.

In step 7, a secure connection is established between the Relay-3 and the Relay-2. The Relay-2 sends IP Address Configuration or a Link-Local IPv6 Address to the Relay-3 in a secure message.

In step 8:, the Relay-3 sends a DCA message to the Relay-2, and the message includes target terminal device information {target End UE User Info ID, target End UE Layer-2 ID, target End UE IP address}, relay terminal device information {Relay-3 User Info ID, Relay-3 Layer-2 ID} and {Relay-2 User Info ID, Relay-2 Layer-2 ID}, and source terminal device information {source End UE User Info ID, source End UE Layer-2 ID}.

A source Layer-2 ID used for sending the DCA message is the Relay-3 Layer-2 ID, and a target Layer-2 ID is the Relay-2 Layer-2 ID.

In step 9, a secure connection is established between the Relay-2 and the source End UE. The source End UE sends IP Address Configuration or a Link-Local IPv6 Address, and an E2E PQI to the Relay-2 in a secure message.

In step 10a, the Relay-2 determines a PQI value between the source End UE and the Relay-2 as PQI1 based on the E2E PQI and the hop number. The Relay-2 sends an LMR message to the Relay-3, and the LMR message includes target terminal device information {target End UE User Info ID, target End UE Layer-2 ID}, relay terminal device information {Relay-3 User Info ID, Relay-3 Layer-2 ID} and {Relay-2 User Info ID, Relay-2 Layer-2 ID}, E2E PQI-PQI1, and a hop number. The Relay-3 determines a PQI value between the Relay-2 and the Relay-3 to be PQI2 based on the received E2E PQI-PQI1 and the received hop number. The Relay-3 sends an LMR message to the target End UE, and the LMR message includes target terminal device information {target End UE User Info ID, target End UE Layer-2 ID}, relay terminal device information {Relay-3 User Info ID, Relay-3 Layer-2 ID} and {Relay-2 User Info ID, Relay-2 Layer-2 ID}, E2E PQI-PQI1-PQI2, and a hop number.

In step 10b, the target End UE sends a Link Modification Accept (LMA) message to the Relay-3 and the Relay-3 sends an LMA message to the Relay-2.

In step 11, the Relay-2 sends a DCA message to the source End UE, and the DCA message includes target terminal device information {target End UE User Info ID, target End UE Layer-2 ID, target End UE IP address}, relay terminal device information {Relay-3 User Info ID, Relay-3 Layer-2 ID, Relay-3 IP address} and {Relay-2 User Info ID, Relay-2 Layer-2 ID}, source terminal device information {source End UE User Info ID, source End UE Layer-2 ID}, IP Address Configuration or a Link-Local IPv6 Address, and PQI1.

A source Layer-2 ID used for sending the above DCA message is the Relay-2 Layer-2 ID, and a target Layer-2 ID is the source End UE Layer-2 ID.

After the connection is established, the source End UE can send an IP data packet to the target End UE through the target End UE IP address.

In the method according to the embodiments of the present application, for the multi-hop connection establishment process which is performed after the Relay UEs and the target End UE are discovered through the independent Discovery process, the User Info IDs and Layer-2 ID information of all the Relay UEs and the target End UE are contained in the DCR by the source End UE, and the Relay UE in the multi-hop path searches the next-hop Relay UE and establishes the connection according to the information. It should be noted that, for the single-hop UE-to-UE Relay in the related art, the DCR does not contain the Relay UE/target End UE Layer-2 ID, because the Relay UE itself stores a corresponding relationship between the User Info ID and the Layer-2 ID of the target End UE. For the multi-hop UE-to-UE Relay, if each Relay UE on the multi-hop path stores a mapping relationship between the User Info ID and the Layer-2 ID of the End UE/Relay UE, storage and calculation costs for the Relay UEs are huge. Therefore, in the present disclosure, the mapping relationships between the User Info ID and the Layer-2 ID of the Relay UE/End UE on the path are carried in the DCR, so that the Relay UE on the multi-hop path can determine the Layer-2 IDs conveniently.

For the determination of the PQI value, the Relay UE determines the PQI value of each hop according to the hop count. It should be noted that the hop count need not be considered in determining the PQI value for the single-hop UE-to-UE Relay in the related art.

For the multi-hop connection establishment process without the independent Discovery process, the source End UE and each Relay UE add own Layer-2 ID (the Layer-2 ID is used as unique identification of the Relay UE for the subsequent connection establishment process) in the DCR to form the complete User Info ID and Layer-2 ID information of each UE. The Relay UE in the multi-hop path sends the DCA message according to the information. It should be noted that, for the single-hop UE-to-UE Relay in the related art, the DCR does not contain the Relay UE/target End UE Layer-2 ID. For the determination of the PQI value, the Relay UE determines the PQI value of each hop according to the hop number. The Relay UE may be selected by the target End UE according to the signal strength information or by other Relay UE according to the signal strength information.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same inventive concept, embodiments of the present application further provide an apparatus for implementing the above proximity services communication method. The implementation solution for solving problems provided by the apparatus is similar to the implementation solution described in the above method, and therefore, for the specific definitions in one or more embodiments of the proximity services communication apparatus provided below, reference can be made to the definitions of the proximity services communication method in the above description, and the definitions are not repeated herein.

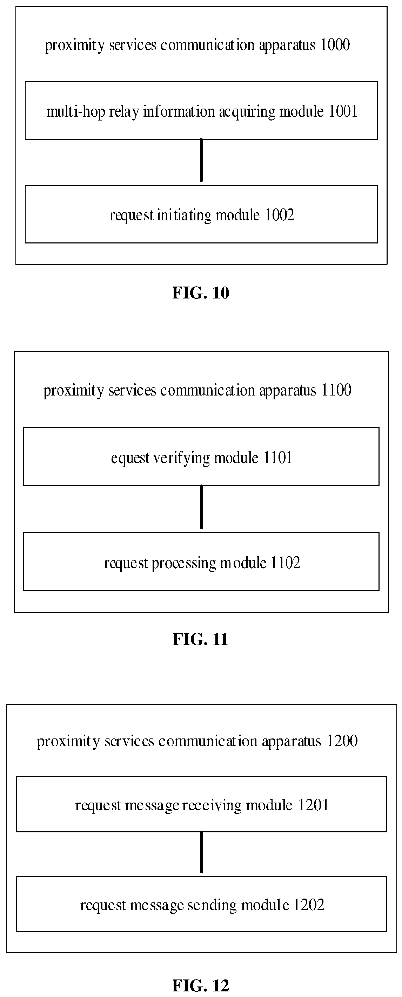

In an embodiment, as shown in FIG. 10, there is provided a proximity services communication apparatus, which may be applied to a source terminal device. The proximity services communication apparatus 1000 includes:
a multi-hop relay information acquiring module 1001, configured to acquire multi-hop relay information; and
a request initiating module 1002, configured to sequentially initiate direct communication requests at relay terminal devices according to the multi-hop relay information.

In an embodiment, the request initiating module 1002 may be configured to send a first direct communication request to a first relay terminal device based on the multi-hop relay information, so that the first relay terminal device initiates a second direct communication request to a subsequent relay terminal device based on the multi-hop relay information, where the subsequent relay terminal device is determined based on the multi-hop relay information.

In an embodiment, the proximity services communication apparatus 1000 further includes:
a response information processing module, configured to: receive first response information generated by the first relay terminal device responding to the first direct communication request, and establish a connection between the source terminal device and the first relay terminal device.

In an embodiment, the proximity services communication apparatus 1000 further includes:
a connection establishing module, configured to receive a first direct communication accept message of the first relay terminal device.

In an embodiment, the direct communication request includes any one or more of: source terminal device information, relay terminal device information corresponding to each relay terminal device, target terminal device information, hop count information used for indicating a number of hops from a current terminal device to the target terminal device, and an RSC. Device information corresponding to each of the source terminal device, the target terminal device and each relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In an embodiment, the multi-hop relay information acquiring module 1001 may be configured to: send a discovery request message, where the discovery request message includes target terminal device information; and receive a discovery response message through the relay terminal devices, and determine the multi-hop relay information based on the discovery response message, where the multi-hop relay information includes: the relay terminal device information and multi-hop path information.

In an embodiment, as shown in FIG. 11, there is provided a proximity services communication apparatus 1100 which may be applied to a relay terminal device. The proximity services communication apparatus 1100 includes:
a request verifying module 1101, configured to receive a first direct communication request of a first terminal device, and verify the first direct communication request, where the first terminal device includes a source terminal device or a relay terminal device; the first direct communication request includes multi-hop relay information; and
a request processing module 1102, configured to, initiate a second direct communication request to a second terminal device when verification of the first direct communication request is completed, where the second terminal device includes a target terminal device or a relay terminal device.

In an embodiment, the request verifying module 1101 is configured to: compare relay terminal device information corresponding to the relay terminal device with relay terminal device information contained in the first direct communication request; and compare a relay service code (RSC) contained in the first direct communication request with an RSC acquired by a PCF network element.

In an embodiment, the communication apparatus 1100 further includes: a connection establishing module, configured to send first response information to the first terminal device, and establish a connection between the relay terminal device and the first terminal device.

In an embodiment, the communication apparatus 1100 further includes a secure message processing module, configured to: receive a secure message sent by the first terminal device, and determine a PQI parameter between the first terminal device and the relay terminal device based on the secure message, where the secure message includes at least one of IP address configuration information, orn End-to-End PQI parameter.

In an embodiment, the communication apparatus 1100 further includes a direct communication accept message processing module, configured to receive a second direct communication accept message of the second terminal device, and send a first direct communication accept message to the first terminal device, so as to establish a multi-hop connection between the source terminal device and the target terminal device based on the multiple relay terminal devices.

In an embodiment, a direct communication request includes source terminal device information, relay terminal device information corresponding to each relay terminal device, target terminal device information, hop count information used for indicating a number of hops from a current terminal device to the target terminal device, and an RSC. Device information corresponding to the source terminal device, the target terminal device and the relay terminal device includes terminal device user information identification and layer-2 identification information.

In an embodiment, the layer-2 identification information corresponding to the source terminal device and the layer-2 identification information corresponding to the target terminal device in the direct communication request are configured based on terminal devices corresponding to a current connection.

In an embodiment, the multi-hop relay information includes relay terminal device information and multi-hop path information.

In an embodiment, referring to FIG. 12, there is provided a proximity services communication apparatus 1200 which may be applied to a relay terminal device. The communication apparatus 1200 includes:
a request message receiving module 1201, configured to receive a second direct communication accept message of a second terminal device, and establish a connection between the relay terminal device and the second terminal device, where the second terminal device includes a target terminal device or a relay terminal device; and
a request message sending module 1202, configured to send a first direct communication accept message to a first terminal device, so as to establish a multi-hop connection between a source terminal device and the target terminal device based on the multiple relay terminal devices, where the first terminal device includes the source terminal device or a relay terminal device,
where the first direct communication accept message and the second direct communication accept message each include multi-hop relay information.

In an embodiment, the first direct communication accept message and the second direct communication accept message each further include: source terminal device information, target terminal device information, and hop count information used for indicating a number of hops from a current terminal device to the target terminal device;
where device information corresponding to the source terminal device, the target terminal device and the relay terminal device includes terminal device user information identification and layer-2 identification information.

In an embodiment, the multi-hop relay information includes relay terminal device information and multi-hop path information.

In an embodiment, the layer-2 identification information corresponding to the source terminal device and the layer-2 identification information corresponding to the target terminal device are configured based on terminal devices corresponding to a current connection.

In an embodiment, the communication apparatus 1200 further includes:
a direct communication request receiving module, configured to receive a first direct communication request of the first terminal device, where the first terminal device includes the source terminal device or the relay terminal device; and
a direct communication request sending module, configured to generate a second direct communication request based on the relay terminal device information, and send the second direct communication request to the second terminal device, where the second direct communication request includes the relay terminal device information; the second terminal device includes: the relay terminal device and/or the target terminal device.

In an embodiment, the first direct communication request includes: source terminal device information, target terminal device information, and a relay service code (RSC); or, the first direct communication request includes: source terminal device information, target terminal device information, an RSC, and relay terminal device information of at least one relay terminal device;
the second direct communication request includes: the source terminal device information, the target terminal device information, an RSC, and relay terminal device information of at least one relay terminal device;
where device information corresponding to the source terminal device, the target terminal device and the relay terminal device includes terminal device user information identification and layer-2 identification information.

In an embodiment, the first direct communication request and/or the second direct communication request further includes a relay terminal device performance parameter.

In an embodiment, the communication apparatus 1200 further includes:
a target relay terminal device selecting module, configured to: determine a target relay terminal device according to the relay terminal device performance parameters corresponding to respective relay terminal devices; and write the relay terminal device information corresponding to the target relay terminal device into a direct communication request, and send the direct communication request.

In an embodiment, the relay terminal device performance parameter includes at least one of: a signal strength parameter between the relay terminal device and the source terminal device, or a load parameter of the relay terminal device.

In an embodiment, the first direct communication request and/or the second direct communication request further includes relay multi-hop threshold information.

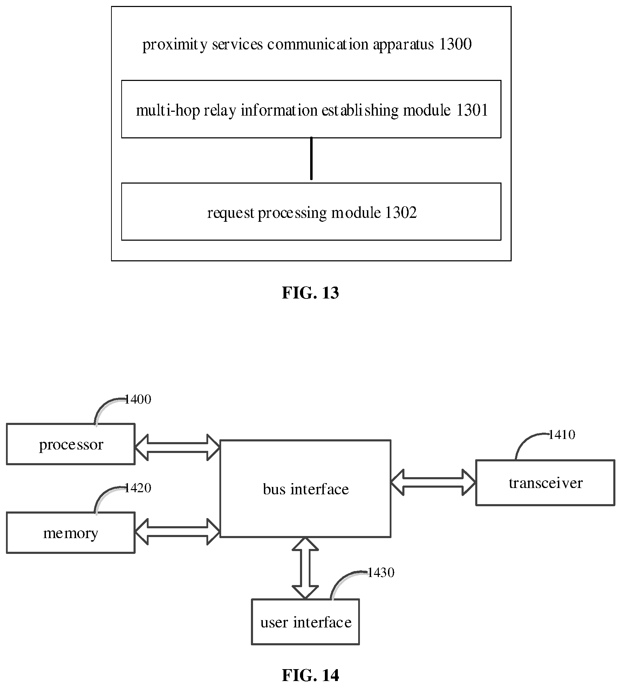

In an embodiment, referring to FIG. 13, there is provided a proximity services communication apparatus 1300 which may be applied to a target terminal device. The communication apparatus 1300 includes:
a multi-hop relay information establishing module 1301 configured to establish multi-hop relay information according to a received direct communication request corresponding to at least one relay terminal device; and
a request processing module 1302, configured to sequentially initiate direct communication accept messages at relay terminal devices according to the multi-hop relay information.

In an embodiment, the direct communication request includes a relay terminal device performance parameter.

In an embodiment, the multi-hop relay information establishing module 1301 is configured to: sort respective relay terminal devices according to the relay terminal device performance parameters; and select a target relay terminal device based on a sorting result, and generate the multi-hop relay information.

In an embodiment, the direct communication request includes a target relay terminal device configured by a relay terminal device;
the multi-hop relay information establishing module 1301 is further configured to: establish the multi-hop relay information based on the target relay terminal device.

In an embodiment, the relay terminal device performance parameter includes at least one of a signal strength parameter between the relay terminal device or the source terminal device and a load parameter of the relay terminal device.

In an embodiment, the multi-hop relay information includes relay terminal device information and multi-hop path information.

In an embodiment, the direct communication request further includes relay multi-hop threshold information;
the multi-hop relay information establishing module 1301 is further configured to: select a number of target relay terminal devices satisfying the relay multi-hop threshold information, and generate the multi-hop relay information.

The modules in the proximity services communication apparatus may be wholly or partially implemented by software, hardware and a combination thereof. The modules may be embedded in or independent of a processor in a computer device in hardware, or may be stored in a memory in the computer device in software, such that the processor can conveniently call the modules to execute the operations corresponding to the modules.

In an embodiment, there is provided a communication apparatus, as shown in FIG. 14. The apparatus includes: a memory 1420, a transceiver 1410, a processor 1400 and a user interface 1430. The processor 1400 is configured to read a computer program in the memory 1420 and perform the method according to the above embodiments; the transceiver 1410 is configured to receive and send data under control of the processor 1400.

In FIG. 14, a bus architecture may include any number of interconnected buses and bridges, which specifically link various circuits of one or more processors represented by the processor and memories represented by the memory together. The bus architecture may also link together various other circuits such as peripherals, voltage regulators, and power management circuits, which are well known in the art, and therefore, will not be further described herein. A bus interface provides an interface. The transceiver may be a number of elements, that is, include a transmitter and a receiver, and provide a unit for communication with various other apparatuses over transmission media including wireless channels, wired channels, fiber optic cables, or the like. For different user equipment, the user interface may be an interface capable of externally or internally connecting required devices, and the connected devices include, but are not limited to, a keypad, a display, a loudspeaker, a microphone, a joystick, or the like.

The processor is responsible for managing the bus architecture and general processing, and the memory may store data used when the processor performs operations.

In some embodiments, the processor may be a central processing unit (CPU), an application specific integrated circuit (ASIC), a field-programmable gate array (FPGA), or a complex programmable logic device (CPLD), and may also adopt a multi-core architecture.

The processor is configured to execute any method according to the embodiment of the present application according to obtained executable instructions by calling the program stored in the memory. The processor and the memory may be physically arranged separately.

It should be noted herein that the apparatus according to the embodiment of the present disclosure can implement all the method steps implemented in the method embodiment, and can achieve the same technical effects, and the same parts and beneficial effects of this embodiment as those of the method embodiment are not repeated herein.

The corresponding entity apparatus on the terminal side is shown in FIG. 14, can implement all the method steps implemented in the method embodiment on the terminal side, and can achieve the same technical effects, and the same parts and beneficial effects of this embodiment as those of the method embodiment are not repeated herein.

Those skilled in the art will appreciate that the structure shown in FIG. 14 is only a block diagram of a part of the structure associated with the application solution and does not constitute a limitation on the communication device to which the application solution is applied, and a particular communication device may include more or fewer components than shown components, or combine certain components, or have a different arrangement of components.

In an embodiment, there is further provided an electronic device, including a memory and a processor, the memory storing a computer program, and the processor implementing the steps of the above method embodiments when executing the computer program.

In an embodiment, there is provided a processor-readable storage medium having a computer program stored thereon, the computer program, when executed by a processor, implementing the steps of the above method embodiments.

The processor-readable storage medium may be any available medium or data storage device that can be accessed by a processor, including but not limited to a magnetic memory (e.g., a floppy disk, a hard disk, magnetic tape, a magneto-optical disk (MO), etc.), an optical memory (e.g., a CD, a DVD, a BD, an HVD, etc.), and a semiconductor memory (e.g., an ROM, an EPROM, an EEPROM, a non-transitory memory (NAND FLASH), and a solid state disk (SSDs)), etc.

In an embodiment, there is provided a computer program product including a computer program which, when executed by a processor, implements the steps in the above method embodiments.

It should be noted that user information (including but not limited to user device information, user personal information, or the like) and data (including but not limited to data for analysis, stored data, displayed data, or the like) involved in the present application are information and data authorized by the user or sufficiently authorized by each party, and collection, use and processing of relevant data require compliance with relevant laws, regulations and standards in relevant countries and regions.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, databases or other media used in the embodiments of the present application can include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magneto resistive random access memory (MRAM), a ferroelectric random access memory (FRAM), a phase change memory (PCM), a graphene memory, or the like. The transitory memory can include a random access memory (RAM), an external cache memory, or the like. By way of illustration and not limitation, the RAM can take many forms such as a static random access memory (SRAM) and a dynamic random access memory (DRAM). The databases involved in the embodiments of the present application may include at least one of relational and non-relational databases. The non-relational database may include, but is not limited to, a block chain-based distributed database, or the like. The processors referred to in the embodiments of the present application may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

Finally, it should be noted that the above embodiments are only used to illustrate the technical solutions of the present application, not to limit the present application; although the present application is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present application, and all of them should be included in the scope of the claims and description of the present application. Particularly, as long as structural conflicts do not exist, all technical features mentioned in all the embodiments may be combined together in any mode. The present application is not limited to the specific embodiments disclosed in the description, but includes all technical solutions falling into the scope of the claims.

## Claims

1. A proximity services communication method, applied to a source terminal device, **characterized by** comprising:
acquiring multi-hop relay information; and
sequentially initiating direct communication requests at relay terminal devices according to the multi-hop relay information.

2. The proximity services communication method according to claim 1, wherein sequentially initiating the direct communication requests at the relay terminal devices according to the multi-hop relay information comprises:
sending a first direct communication request to a first relay terminal device according to the multi-hop relay information.

3. The proximity services communication method according to claim 2, further comprising:
receiving first response information, and establishing a connection between the source terminal device and the first relay terminal device.

4. The proximity services communication method according to claim 2 or 3, further comprising:
receiving a first direct communication accept message of the first relay terminal device.

5. The proximity services communication method according to claim 1 or 2, wherein the direct communication request comprises any one or any combination of: source terminal device information, relay terminal device information corresponding to each relay terminal device, target terminal device information, hop count information configured for indicating a number of hops from a current terminal device to a target terminal device, and a relay service code, RSC,
wherein device information corresponding to each of the source terminal device, the target terminal device and the each relay terminal device comprises terminal device user information identification and layer-2 identification information.

6. The proximity services communication method according to claim 5, wherein the layer-2 identification information corresponding to the source terminal device and the layer-2 identification information corresponding to the target terminal device in the direct communication request are configured based on terminal devices corresponding to a current connection.

7. The proximity services communication method according to claim 1, wherein acquiring the multi-hop relay information comprises:
sending a discovery request message, wherein the discovery request message comprises target terminal device information; and
receiving a discovery response message through the relay terminal devices, and determining the multi-hop relay information based on the discovery response message, wherein the multi-hop relay information comprises relay terminal device information and multi-hop path information.

8. A proximity services communication method, applied to a relay terminal device, **characterized by** comprising:
receiving a first direct communication request of a first terminal device, and verifying the first direct communication request, wherein the first terminal device comprises a source terminal device or a relay terminal device, and the first direct communication request comprises multi-hop relay information; and
initiating a second direct communication request to a second terminal device when verification of the first direct communication request is completed, wherein the second terminal device comprises a target terminal device or a relay terminal device.

9. The proximity services communication method according to claim 8, wherein verifying the first direct communication request comprises:
comparing relay terminal device information corresponding to the relay terminal device with relay terminal device information contained in the first direct communication request; and/or
comparing a relay service code, RSC, contained in the first direct communication request with an RSC acquired by a Policy Control function, PCF, network element.

10. The proximity services communication method according to claim 8, wherein when the verification of the first direct communication request is successful, the method further comprises:
sending first response information to the first terminal device, and establishing a connection between the relay terminal device and the first terminal device.

11. The proximity services communication method according to claim 10, further comprising:
receiving a secure message sent by the first terminal device, and determining a PC5 QoS Identifier, PQI, parameter between the first terminal device and the relay terminal device based on the secure message,
wherein the secure message comprises at least one of: IP address configuration information or an End-to-End PQI parameter.

12. The proximity services communication method according to claim 8, further comprising:
receiving a second direct communication accept message of the second terminal device, and sending a first direct communication accept message to the first terminal device.

13. The proximity services communication method according to claim 8 or 9, wherein a direct communication request comprises any one or more of: source terminal device information, relay terminal device information corresponding to each relay terminal device, target terminal device information, hop count information configured for indicating a number of hops from a current terminal device to the target terminal device, and an RSC,
wherein device information corresponding to each of the source terminal device, the target terminal device and the each relay terminal device comprises terminal device user information identification and layer-2 identification information.

14. The proximity services communication method according to claim 13, wherein the layer-2 identification information corresponding to the source terminal device and the layer-2 identification information corresponding to the target terminal device in the direct communication request are configured based on terminal devices corresponding to a current connection.

15. The proximity services communication method according to claim 8, wherein the multi-hop relay information comprises relay terminal device information and multi-hop path information.

16. A proximity services communication method, applied to a relay terminal device, **characterized by** comprising:
receiving a second direct communication accept message of a second terminal device, and establishing a connection between the relay terminal device and the second terminal device, wherein the second terminal device comprises a target terminal device or a relay terminal device; and
sending a first direct communication accept message to a first terminal device, wherein the first terminal device comprises a source terminal device or a relay terminal device;
wherein the first direct communication accept message and the second direct communication accept message each comprise multi-hop relay information.

17. The proximity services communication method according to claim 16, wherein the first direct communication accept message and the second direct communication accept message each further comprise: source terminal device information, target terminal device information, and hop count information configured for indicating a number of hops from a current terminal device to the target terminal device;
wherein device information corresponding to each of the source terminal device, the target terminal device and the relay terminal device comprises terminal device user information identification and layer-2 identification information.

18. The proximity services communication method according to claim 16 or 17, wherein the multi-hop relay information comprises relay terminal device information and multi-hop path information.

19. The proximity services communication method according to claim 17, wherein the layer-2 identification information corresponding to the source terminal device and the layer-2 identification information corresponding to the target terminal device are configured based on terminal devices corresponding to a current connection.

20. The proximity services communication method according to claim 16, wherein prior to receiving the second direct communication accept message of the second terminal device, further comprising:
receiving a first direct communication request of the first terminal device;
generating a second direct communication request based on relay terminal device information, and sending the second direct communication request to the second terminal device, wherein the second direct communication request comprises the relay terminal device information.

21. The proximity services communication method according to claim 20, wherein the first direct communication request comprises source terminal device information, target terminal device information, and a relay service code, RSC; or, the first direct communication request comprises source terminal device information, target terminal device information, an RSC, and relay terminal device information of at least one relay terminal device;
the second direct communication request comprises the source terminal device information, the target terminal device information, an RSC, and relay terminal device information of at least one relay terminal device;
wherein device information corresponding to each of the source terminal device, the target terminal device and each relay terminal device comprises terminal device user information identification and layer-2 identification information.

22. The proximity services communication method according to claim 20, wherein the first direct communication request and/or the second direct communication request further comprises a relay terminal device performance parameter.

23. The proximity services communication method according to claim 22, further comprising:
determining a target relay terminal device according to relay terminal device performance parameters corresponding to respective relay terminal devices; and
writing the relay terminal device information corresponding to the target relay terminal device into a direct communication request, and sending the direct communication request.

24. The proximity services communication method according to claim 22 or 23, wherein the relay terminal device performance parameter comprise at least one of: a signal strength parameter between the relay terminal device and the source terminal device, or a load parameter of the relay terminal device.

25. The proximity services communication method according to claim 20, wherein the first direct communication request and/or the second direct communication request further comprises relay multi-hop threshold information.

26. A proximity services communication method, applied to a target terminal device, **characterized by** comprising:
establishing multi-hop relay information according to a received direct communication request corresponding to at least one relay terminal device; and
sequentially initiating direct communication accept messages at relay terminal devices according to the multi-hop relay information.

27. The proximity services communication method according to claim 26, wherein the direct communication request comprises a relay terminal device performance parameter.

28. The proximity services communication method according to claim 27, wherein establishing the multi-hop relay information according to the received direct communication request corresponding to the at least one relay terminal device comprises:
sorting respective relay terminal devices according to the relay terminal device performance parameters; and
selecting a target relay terminal device based on a sorting result, and generating the multi-hop relay information.

29. The proximity services communication method according to claim 27, wherein the direct communication request comprises a target relay terminal device configured by a relay terminal device; and
the proximity services communication method further comprises:
establishing the multi-hop relay information based on the target relay terminal device.

30. The proximity services communication method according to claim 27 or 28, wherein the relay terminal device performance parameter comprise at least one of: a signal strength parameter between the relay terminal device and the source terminal device, or a load parameter of the relay terminal device.

31. The proximity services communication method according to claim 26, wherein the multi-hop relay information comprises relay terminal device information and multi-hop path information.

32. The proximity services communication method according to claim 26 or 28, wherein the direct communication request further comprises relay multi-hop threshold information; and
the proximity services communication method further comprises:
selecting a number of target relay terminal devices satisfying the relay multi-hop threshold information, and generating the multi-hop relay information.

33. A proximity services communication apparatus, applied to a source terminal device, **characterized by** comprising:
a multi-hop relay information acquiring module, configured to acquire multi-hop relay information; and
a request initiating module, configured to sequentially initiate direct communication requests at relay terminal devices according to the multi-hop relay information.

34. A proximity services communication apparatus, applied to a relay terminal device, **characterized by** comprising:
a request verifying module, configured to receive a first direct communication request of a first terminal device, and verify the first direct communication request, wherein the first terminal device comprises: a source terminal device or a relay terminal device, and the first direct communication request comprises multi-hop relay information; and
a request processing module, configured to, initiate a second direct communication request to a second terminal device when verification of the first direct communication request is completed, wherein the second terminal device comprises a target terminal device or a relay terminal device.

35. A proximity services communication apparatus, applied to a relay terminal device, **characterized by** comprising:
a request message receiving module, configured to receive a second direct communication accept message of a second terminal device, and establish a connection between the relay terminal device and the second terminal device, wherein the second terminal device comprises a target terminal device or a relay terminal device; and
a request message sending module, configured to send a first direct communication accept message to a first terminal device, wherein the first terminal device comprises a source terminal device or a relay terminal device;
wherein the first direct communication accept message and the second direct communication accept message each comprise multi-hop relay information.

36. A proximity services communication apparatus applied to a target terminal device, **characterized by** comprising:
a multi-hop relay information establishing module, configured to establish multi-hop relay information according to a received direct communication request corresponding to at least one relay terminal device; and
a request processing module, configured to sequentially initiate direct communication accept messages at relay terminal devices according to the multi-hop relay information.

37. A communication apparatus, comprising a memory, a transceiver and a processor;
the memory is configured to store a computer program;
the transceiver is configured to transceive data under control of the processor; and
**characterized in that** the processor is configured to read the computer program in the memory and perform:
acquiring multi-hop relay information; and
sequentially initiating direct communication requests at relay terminal devices according to the multi-hop relay information.

38. The communication apparatus according to claim 37, wherein sequentially initiating the direct communication requests at the relay terminal devices according to the multi-hop relay information comprises:
sending a first direct communication request to a first relay terminal device according to the multi-hop relay information.

39. The communication apparatus according to claim 37 or 38, wherein the direct communication request comprises any one or any combination of: source terminal device information, relay terminal device information corresponding to each relay terminal device, target terminal device information, hop count information configured for indicating a number of hops from a current terminal device to a target terminal device, and a relay service code, RSC,
wherein device information corresponding to each of the source terminal device, the target terminal device and the each relay terminal device comprises terminal device user information identification and layer-2 identification information.

40. The communication apparatus according to claim 39, wherein the layer-2 identification information corresponding to the source terminal device and the layer-2 identification information corresponding to the target terminal device in the direct communication request are configured based on terminal devices corresponding to a current connection.

41. The communication apparatus according to claim 39, wherein acquiring the multi-hop relay information comprises:
sending a discovery request message, wherein the discovery request message comprises target terminal device information; and
receiving a discovery response message through the relay terminal devices, and determining the multi-hop relay information based on the discovery response message, wherein the multi-hop relay information comprises relay terminal device information and multi-hop path information.

42. A communication apparatus, comprising a memory, a transceiver and a processor;
the memory is configured to store a computer program;
the transceiver is configured to transceive data under control of the processor; and
**characterized in that** the processor is configured to read the computer program in the memory and perform:
receiving a first direct communication request of a first terminal device, and verifying the first direct communication request, wherein the first terminal device comprises a source terminal device or a relay terminal device, and the first direct communication request comprises multi-hop relay information; and
initiating a second direct communication request to a second terminal device when verification of the first direct communication request is completed, wherein the second terminal device comprises a target terminal device or a relay terminal device.

43. The communication apparatus according to claim 42, wherein verifying the first direct communication request comprises:
comparing relay terminal device information corresponding to the relay terminal device with relay terminal device information contained in the first direct communication request; and/or
comparing a relay service code, RSC, contained in the first direct communication request with an RSC acquired by a Policy Control function, PCF, network element.

44. The communication apparatus according to claim 42, wherein the processor reads the computer program in the memory and performs:
sending first response information to the first terminal device and establishing a connection between the relay terminal device and the first terminal device, when the verification of the first direct communication request is successful.

45. The communication apparatus according to claim 42, wherein the processor reads the computer program in the memory and performs:
receiving a secure message sent by the first terminal device, and determining a PC5 QoS Identifier, PQI, parameter between the first terminal device and the relay terminal device based on the secure message,
wherein the secure message comprises at least one of: IP address configuration information or an End-to-End PQI parameter.

46. The communication apparatus according to claim 42, wherein a direct communication request comprises any one or more of: source terminal device information, relay terminal device information corresponding to each relay terminal device, target terminal device information, hop count information configured for indicating a number of hops from a current terminal device to the target terminal device, and an RSC,
wherein device information corresponding to each of the source terminal device, the target terminal device and the each relay terminal device comprises terminal device user information identification and layer-2 identification information.

47. The communication apparatus according to claim 46, wherein the layer-2 identification information corresponding to the source terminal device and the layer-2 identification information corresponding to the target terminal device in the direct communication request are configured based on terminal devices corresponding to a current connection.

48. The communication apparatus according to claim 42, wherein the multi-hop relay information comprises relay terminal device information and multi-hop path information.

49. A communication apparatus, comprising a memory, a transceiver and a processor;
the memory is configured to store a computer program;
the transceiver is configured to transceive data under control of the processor; and
**characterized in that** the processor is configured to read the computer program in the memory and perform:
receiving a second direct communication accept message of a second terminal device, and establishing a connection between the relay terminal device and the second terminal device, wherein the second terminal device comprises a target terminal device or a relay terminal device; and
sending a first direct communication accept message to a first terminal device, wherein the first terminal device comprises a source terminal device or a relay terminal device;
wherein the first direct communication accept message and the second direct communication accept message each comprise multi-hop relay information.

50. The communication apparatus according to claim 49, wherein the first direct communication accept message and the second direct communication accept message each further comprise: source terminal device information, target terminal device information, and hop count information configured for indicating a number of hops from a current terminal device to the target terminal device;
wherein device information corresponding to each of the source terminal device, the target terminal device and the relay terminal device comprises terminal device user information identification and layer-2 identification information.

51. The communication apparatus according to claim 49 or 50, wherein the multi-hop relay information comprises relay terminal device information and multi-hop path information.

52. The communication apparatus according to claim 49, wherein the layer-2 identification information corresponding to the source terminal device and the layer-2 identification information corresponding to the target terminal device are configured based on terminal devices corresponding to a current connection.

53. The communication apparatus according to claim 49, wherein the processor reads the computer program in the memory and performs:
prior to receiving the second direct communication accept message of the second terminal device, receiving a first direct communication request of the first terminal device; and generating a second direct communication request based on relay terminal device information, and sending the second direct communication request to the second terminal device, wherein the second direct communication request comprises the relay terminal device information.

54. The communication apparatus according to claim 53, wherein the first direct communication request comprises source terminal device information, target terminal device information, and a relay service code, RSC; or, the first direct communication request comprises source terminal device information, target terminal device information, an RSC and relay terminal device information of at least one relay terminal device;
the second direct communication request comprises the source terminal device information, the target terminal device information, an RSC, and relay terminal device information of at least one relay terminal device;
wherein device information corresponding to each of the source terminal device, the target terminal device and each relay terminal device comprises terminal device user information identification and layer-2 identification information.

55. The communication apparatus according to claim 54, wherein the first direct communication request and/or the second direct communication request further comprises a relay terminal device performance parameter.

56. The communication apparatus according to claim 55, wherein the processor reads the computer program in the memory and performs:
determining a target relay terminal device according to relay terminal device performance parameters corresponding to respective relay terminal devices; and
writing the relay terminal device information corresponding to the target relay terminal device into a direct communication request, and sending the direct communication request.

57. The communication apparatus according to claim 56, wherein the relay terminal device performance parameter comprise at least one of: a signal strength parameter between the relay terminal device and the source terminal device, or a load parameter of the relay terminal device.

58. The communication apparatus according to claim 49, wherein the first direct communication request and/or the second direct communication request further comprises relay multi-hop threshold information.

59. A communication apparatus, comprising a memory, a transceiver and a processor;
the memory is configured to store a computer program;
the transceiver is configured to transceive data under control of the processor; and
**characterized in that** the processor is configured to read the computer program in the memory and perform:
establishing multi-hop relay information according to a received direct communication request corresponding to at least one relay terminal device; and
sequentially initiating direct communication accept messages at relay terminal devices according to the multi-hop relay information.

60. The communication apparatus according to claim 59, wherein the direct communication request comprises a relay terminal device performance parameter.

61. The communication apparatus according to claim 60, wherein establishing the multi-hop relay information according to the received direct communication request corresponding to the at least one relay terminal device comprises:
sorting respective relay terminal devices according to the relay terminal device performance parameters; and
selecting a target relay terminal device based on a sorting result, and generating the multi-hop relay information.

62. The communication apparatus according to claim 60, wherein the direct communication request comprises a target relay terminal device configured by a relay terminal device; and
the processor reads the computer program in the memory and performs: establishing the multi-hop relay information based on the target relay terminal device.

63. The communication apparatus according to claim 60 or 61, wherein the relay terminal device performance parameter comprise at least one of: a signal strength parameter between the relay terminal device and the source terminal device, or a load parameter of the relay terminal device.

64. The communication apparatus according to claim 59, wherein the multi-hop relay information comprises relay terminal device information and multi-hop path information.

65. The communication apparatus according to claim 59 or 61, wherein the direct communication request further comprises relay multi-hop threshold information; and
the processor reads the computer program in the memory and performs:
selecting a number of target relay terminal devices satisfying the relay multi-hop threshold information, and generating the multi-hop relay information.

66. A processor-readable storage medium, storing a program thereon, **characterized in that** the program causes a processor to perform the steps of the proximity services communication method according to any one of claims 1 to 7, 8 to 15, 16 to 25 or 26 to 32.
